# EUROPÄISCHE PATENTSCHRIFT

(11) **EP 0 481 293 B1**
(45) Veröffentlichungstag und Bekanntmachung des Hinweises auf die Patenterteilung: **05.06.1996**
(21) Anmeldenummer: 91116893.8
(22) Anmeldetag: 03.10.1991
(51) Int. Cl.: C09K 19/02, C09K 19/42, C09K 19/46, C09K 19/30, C09K 19/44

(54) **Supertwist-Flüssigkristallanzeige**
Supertwist liquid crystal display
Affichage à cristal liquide supertorsadé

(30) Priorität: 13.10.1990 DE 4032579
(43) Veröffentlichungstag der Anmeldung: 22.04.1992
(73) Patentinhaber: MERCK PATENT GmbH, D-64271 Darmstadt (DE)
(72) Erfinder: Weber, Georg, W-6106 Erzhausen (DE); Plach, Herbert, Dr., W-6100 Darmstadt (DE); Reiffenrath, Volker, W-6101 Rossdorf (DE); Yoshitake, Hiroki, Atsugi-shi, Kanagawa, Pref. 243-02 (JP); Numata, Hiroshi, 3-202 Forest-Hills-Miho, Yokohama-shi, Kanagawa, Pref. 227 (JP)

(56) Entgegenhaltungen:
- EP-A- 0 261 614
- EP-A- 0 365 962
- EP-A- 0 366 985
- EP-A- 0 393 443
- EP-A- 0 416 117
- EP-A- 0 451 854
- WO-A-91/00898

## Beschreibung

Die Erfindung betrifft Supertwist-Flüssigkristallanzeigen (SFA) mit sehr kurzen Schaltzeiten und guten Steilheiten und Winkelabhängigkeiten sowie die darin verwendeten neuen nematischen Flüssigkristallmischungen.

SFA gemäß des Oberbegriffs sind bekannt, z.B. aus EP 0 131 216 B1; DE 34 23 993 A1; EP 0 098 070 A2; M. Schadt und F. Leenhouts, 17. Freiburger Arbeitstagung Flüssigkristalle (8.-10.04.87); K. Kawasaki et al., SID 87 Digest 391 (20.6); M. Schadt und F. Leenhouts, SID 87 Digest 372 (20.1); K. Katoh et al., Japanese Journal of Applied Physics, Vol. 26, No. 11, L 1784-L 1786 (1987); F. Leenhouts et al., Appl. Phys. Lett. 50 (21), 1468 (1987); H.A. van Sprang und H.G. Koopman, J. Appl. Phys. 62 (5), 1734 (1987); T.J. Scheffer und J. Nehring, Appl. Phys. Lett. 45 (10), 1021 (1984), M. Schadt und F. Leenhouts, Appl. Phys. Lett. 50 (5), 236 (1987) und E.P. Raynes, Mol. Cryst. Liq. Cryst. Letters Vol. 4 (1), pp. 1-8 (1986). Der Begriff SFA umfaßt hier jedes höher verdrillte Anzeigeelement mit einem Verdrillungswinkel dem Betrage nach zwischen 160° und 360°, wie beispielsweise die Anzeigeelemente nach Waters et al. (C.M. Waters et al., Proc. Soc. Inf. Disp. (New York) (1985) (3rd Intern. Display Conference, Kobe, Japan), die STN-LCD's (DE OS 35 03 259), SBE-LCD's (T.J. Scheffer und J. Nehring, Appl. Phys. Lett. 45 (1984) 1021), OMI-LCD's (M. Schadt und F. Leenhouts, Appl. Phys. Lett. 50 (1987), 236, DST-LCD's (EP OS 0 246 842) oder BW-STN-LCD's (K. Kawasaki et al., SID 87 Digest 391 (20.6)).

Derartige SFA zeichnen sich im Vergleich zu Standard-TN-Anzeigen durch wesentlich bessere Steilheiten der elektrooptischen Kennlinie und damit verbundenen besseren Kontrastwerten sowie durch eine wesentlich geringere Winkelabhängigkeit des Kontrastes aus. Von besonderem Interesse sind SFA mit sehr kurzen Schaltzeiten insbesondere auch bei tieferen Temperaturen. Zur Erzielung von kurzen Schaltzeiten wurden bisher insbesondere die Viskositäten der Flüssigkristallmischungen optimiert unter Verwendung von meist monotropen Zusätzen mit relativ hohem Dampfdruck. Die erzielten Schaltzeiten waren jedoch nicht für jede Anwendung ausreichend.

Zur Erzielung einer steilen elektrooptischen Kennlinie sollen die Flüssigkristallmischungen relativ große Werte für K₃/K₁ und relativ kleine Werte für Δε/ε_{⊥} aufweisen.

Über die Optimierung des Kontrastes und der Schaltzeiten hinaus werden an derartige Mischungen weitere wichtige Anforderungen gestellt:
1. Breites d/p-Fenster
2. Hohe chemische Dauerstabilität
3. Hoher elektrischer Widerstand
4. Geringe Frequenzabhängigkeit der Schwellenspannung.

Die erzielten Parameterkombinationen sind bei weitem noch nicht ausreichend, insbesondere für Hochmultiplex-STN (1/400). Zum Teil ist dies darauf zurückzuführen, daß die verschiedenen Anforderungen durch Materialparameter gegenläufig beeinflußt werden.

Es besteht somit immer noch ein großer Bedarf nach SFA mit sehr kurzen Schaltzeiten bei gleichzeitig großem Arbeitstemperaturbereich, hoher Kennliniensteilheit, guter Winkelabhängigkeit des Kontrastes und niedriger Schwellenspannung, die den obenangegebenen Anforderungen gerecht werden.

Der Erfindung liegt die Aufgabe zugrunde, SFA bereitzustellen, die die oben angegebenen Nachteile nicht oder nur in geringerem Maße und gleichzeitig sehr kurze Schaltzeiten aufweisen.

Es wurde nun gefunden, daß diese Aufgabe gelöst werden kann, wenn die nematische Flüssigkristallmischung
a) auf Komponente A basiert, welche
   - eine oder mehrere Verbindungen der Formeln IIa oder IIb: 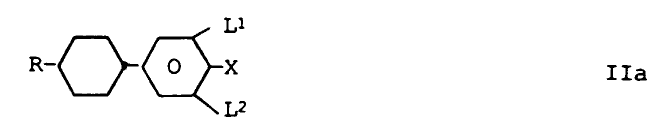 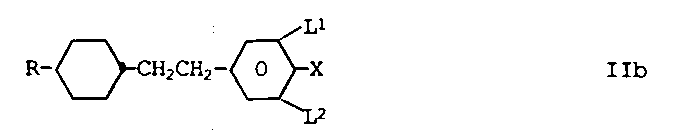
   - eine oder mehrere Verbindungen der Formeln IIc bis IIe: 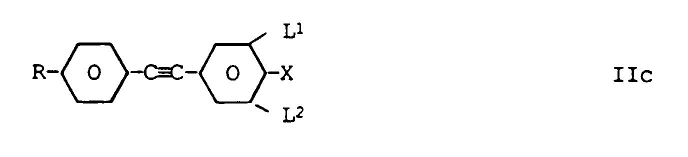 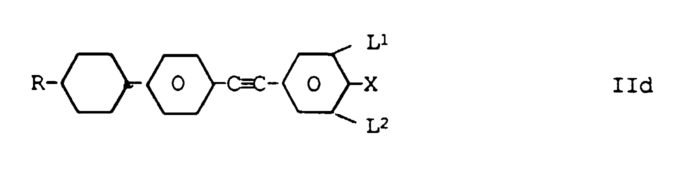 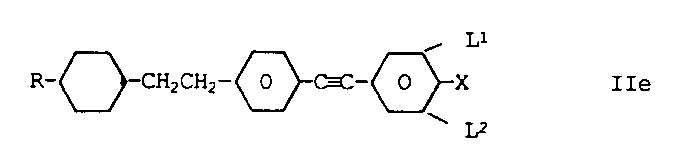
   - und eine oder mehrere Verbindungen der Formeln IIf bis IIk enthält: 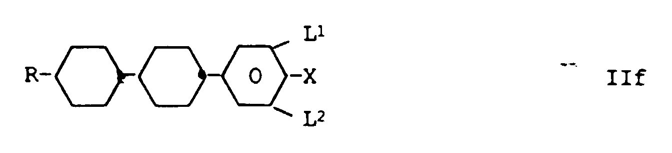 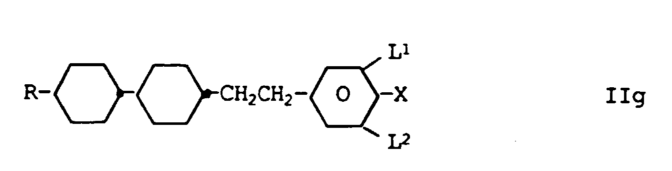 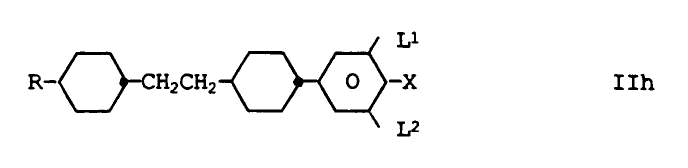 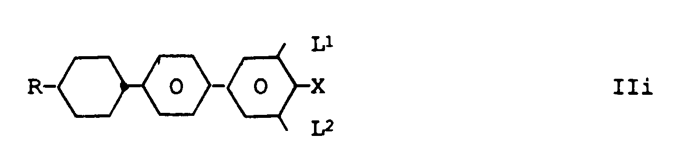 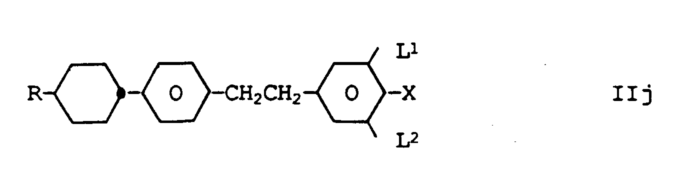 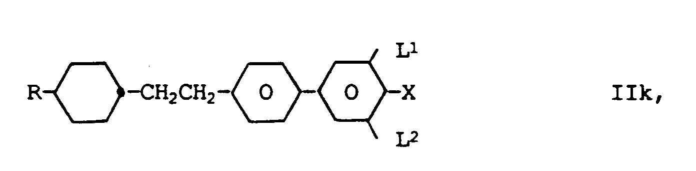 worin
      R n-Alkyl, n-Alkoxy oder n-Alkenyl mit bis zu 9 C-Atomen, und
      L¹ und L² jeweils H oder F,
      X F, Cl, -CF₃, -CHF₂, -OCF₃, -OCHF₂, -OCF₂CF₂H oder -OC₂F₅ bedeuten,
b) 0-40 Gew.% einer flüssigkristallinen Komponente B, bestehend aus einer oder mehreren Verbindungen mit einer dielektrischen Anisotropie von -1,5 bis +1,5 der allgemeinen Formel I, enthält 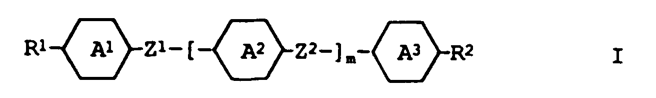 worin
   R¹ und R² jeweils unabhängig voneinander n-Alkyl, n-Alkoxy, n-Oxaalkyl, ω-Fluoralkyl oder n-Alkenyl mit bis zu 9 C-Atomen, die Ringe A¹, A² und A³ jeweils unabhängig voneinander 1,4-Phenylen, 2- oder 3-Fluor-1,4-phenylen, trans-1,4-Cyclohexylen oder 1,4-Cyclohexenylen, Z¹ und Z² jeweils unabhängig voneinander -CH₂CH₂-, -C≡C- oder eine Einfachbindung, und
   m 0, 1 oder 2 bedeutet,
c) 0-20 Gew.% einer flüssigkristallinen Komponente C, bestehend aus einer oder mehreren Verbindungen mit einer dielektrischen Anisotropie von unter -1,5, enthält und
d) eine optisch aktive Komponente D in einer Menge enthält, daß das Verhältnis zwischen Schichtdicke (Abstand der planparallelen Trägerplatten) und natürlicher Ganghöhe der chiralen nematischen Flüssigkristallmischung etwa 0,2 bis 1,7 und insbesondere etwa 0,2 - 1,3 beträgt
   die nematische Flüssigkristallmischung einen nematischen Phasenbereich von mindestens 60 °C, eine Viskosität von nicht mehr als 35 mPa.s und eine dielektrische Anisotropie von mindestens +1 aufweist, wobei die dielektrischen Anisotropien der Verbindungen und die auf die nematische Flüssigkristallmischung bezogenen Parameter auf eine Temperatur von 20 °C bezogen sind.

Gegenstand der Erfindung ist somit ein SFA mit
- zwei planparallelen Trägerplatten, die mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach zwischen 100 und 600°, dadurch gekennzeichnet, daß die nematische Flüssigkristallmischung
   a) auf Komponente A basiert, welche
      - eine oder mehrere Verbindungen der Formeln IIa oder IIb: 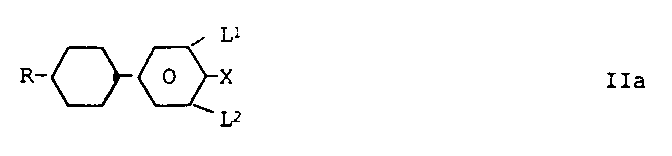 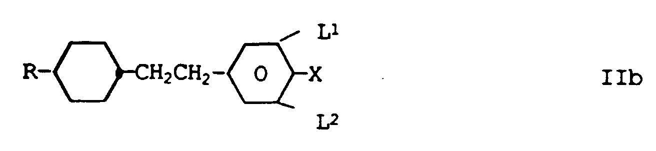
      - eine oder mehrere Verbindungen der Formeln IIc bis IIe: 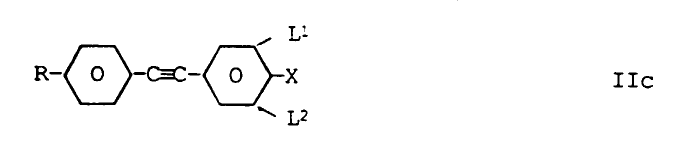 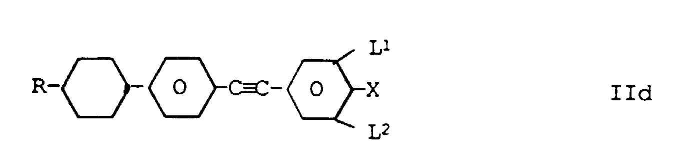 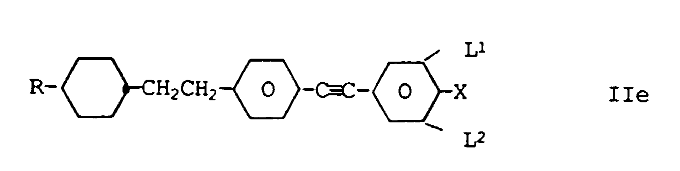
      - und eine oder mehrere Verbindungen der Formeln IIf bis IIk enthält: 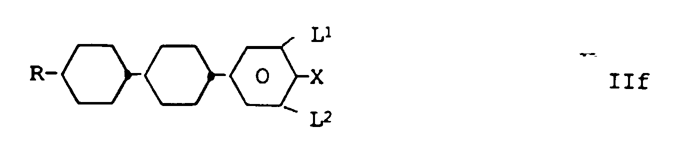 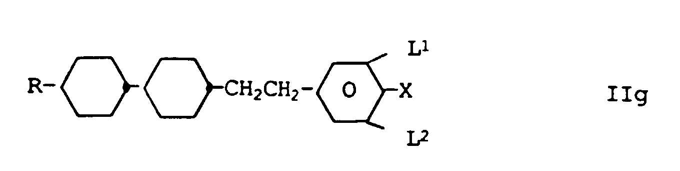 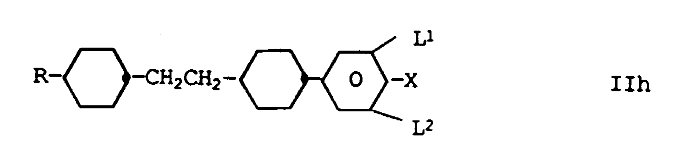 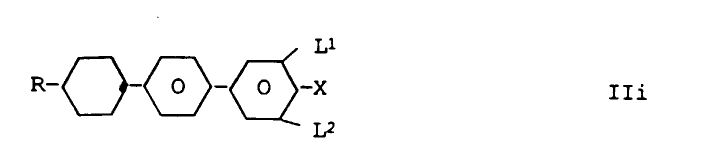 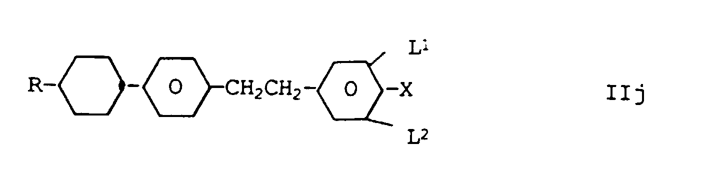 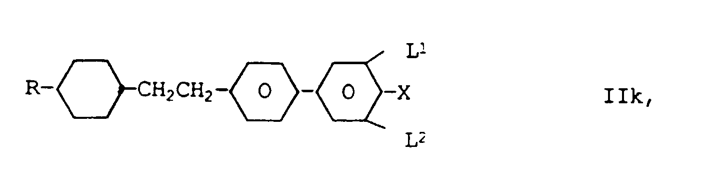 worin
         R n-Alkyl, n-Alkoxy oder n-Alkenyl mit bis zu 9 C-Atomen, und
         L¹ und L² jeweils H oder F,
         X F, Cl, -CF₃, -CHF₂, -OCF₃, -OCHF₂, -OCF₂CF₂H oder -OC₂F₅ bedeuten,
   b) 0-40 Gew.% einer flüssigkristallinen Komponente bestehend aus einer oder mehreren Verbindungen mit einer dielektrischen Anisotropie von -1,5 bis +1,5 der allgemeinen Formel I, enthält 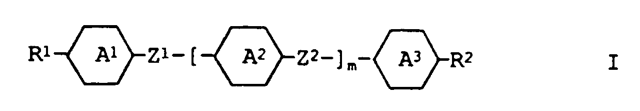 worin
      R¹ und R² jeweils unabhängig voneinander n-Alkyl, n-Alkoxy, n-Oxaalkyl, ω-Fluoralkyl oder n-Alkenyl mit bis zu 9 C-Atomen, die Ringe A¹, A² und A³ jeweils unabhängig voneinander 1,4-Phenylen, 2- oder 3-Fluor-1,4-phenylen, trans-1,4-Cyclohexylen oder 1,4-Cyclohexenylen,
      Z¹ und Z² jeweils unabhängig voneinander -CH₂CH₂-, -C≡C- oder eine Einfachbindung, und
      m 0, 1 oder 2 bedeutet,
   c) 0-20 Gew.% einer flüssigkristallinen Komponente C, bestehend aus einer oder mehreren Verbindungen mit einer dielektrischen Anisotropie von unter -1,5, enthält und
   d) eine optisch aktive Komponente D in einer Menge, daß das Verhältnis zwischen Schichtdicke (Abstand der planparallelen Trägerplatten) und natürlicher Ganghöhe der chiralen nematischen Flüssigkristallmischung etwa 0,2 bis 1,3 beträgt, enthält und
      daß die nematische Flüssigkristallmischung einen nematischen Phasenbereich von mindestens 60 °C, eine Viskosität von nicht mehr als 35 mPa.s und eine dielektrische Anisotropie von mindestens +1 aufweist, wobei die dielektrischen Anisotropien der Verbindungen und die auf die nematische Flüssigkristallmischung bezogenen Parameter auf eine Temperatur von 20 °C bezogen sind.

Gegenstand der Erfindung sind auch entsprechende Flüssigkristallmischungen zur Verwendung in SFA.

Die einzelnen Verbindungen z.B. der Formeln I und IIa bis IIk oder auch andere Verbindungen, die in den erfindungsgemäßen SFA verwendet werden können, sind entweder bekannt, oder sie können analog zu den bekannten Verbindungen hergestellt werden.

### Bevorzugte Flüssigkristallmischungen enthalten

a) mindestens eine Komponente, ausgewählt aus der Gruppe B4, bestehend aus Verbindungen der Formeln AI bis AVI: 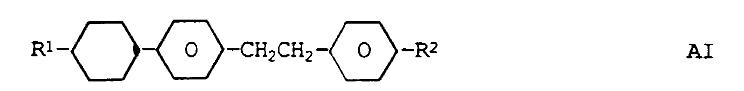 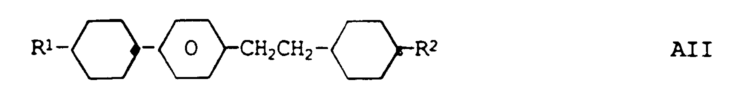 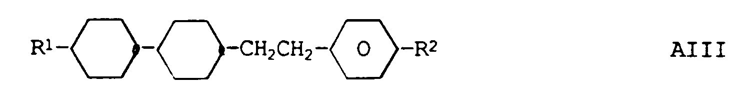 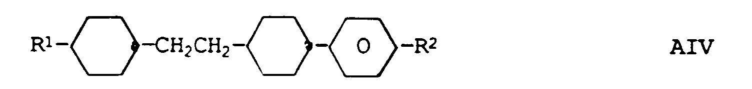 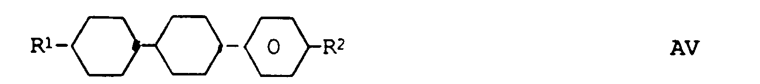 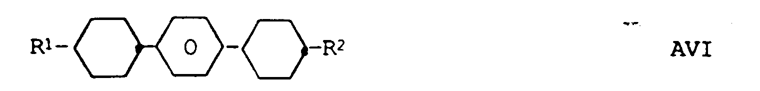 worin R¹ und R² jeweils unabhängig voneinander jeweils R bedeuten und
   - R: Alkyl mit 1-12 C-Atomen ist, worin auch eine oder zwei nicht benachbarte CH₂-Gruppen durch -O-, -CH=CH-, -CO-,-O-CO- oder -CO-O- ersetzt sein können,
b) und/oder mindestens eine Komponente, ausgewählt aus der Gruppe B1, bestehend aus den Verbindungen der Formeln BI bis BIV: 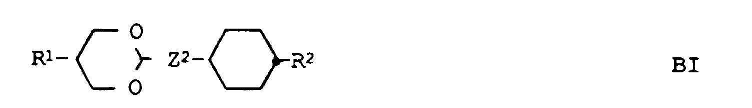 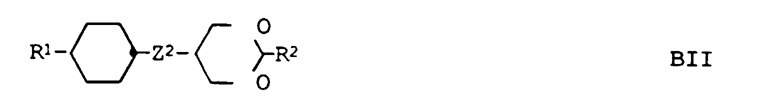 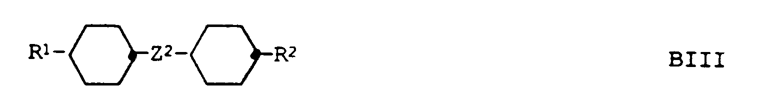 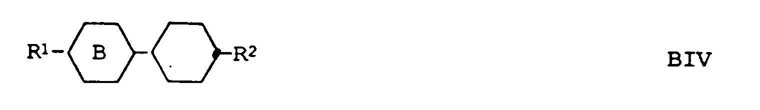 worin R¹ und R² jeweils unabhängig voneinander die für R angegebene Bedeutung haben, Z² -CH₂CH₂-, -CO-O-, -O-CO-oder eine Einfachbindung, und 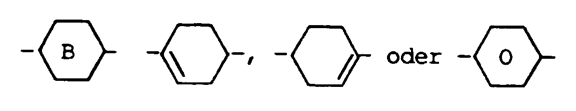 bedeutet,
   und/oder mindestens eine Komponente, ausgewählt aus der Gruppe B2, bestehend aus den Verbindungen der Formeln BV bis BVIII: 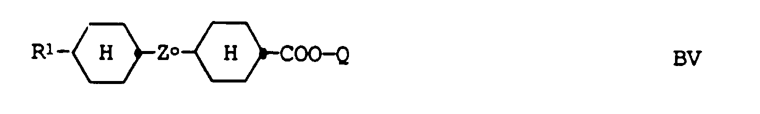 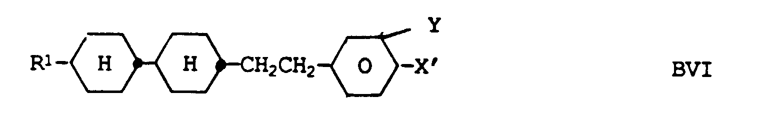 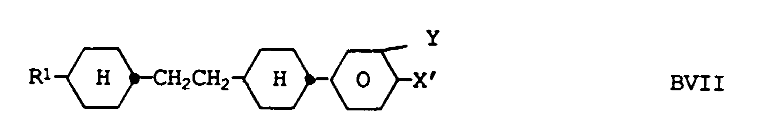 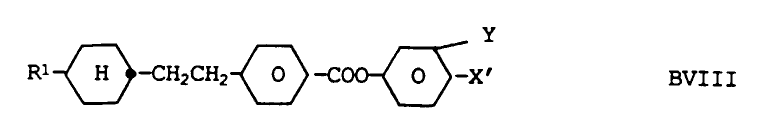 worin R¹ die für R angegebene Bedeutung hat,
   - Z^{o}: -CH₂CH₂- oder eine Einfachbindung ist und
   - Q: 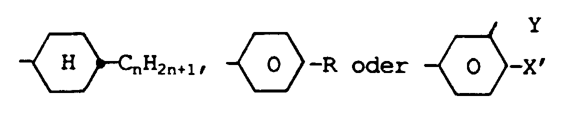
   bedeutet,
   wobei n 1 bis 9 ist, X' bedeutet CN oder F und Y ist H oder F,
   und/oder mindestens eine Komponente, ausgewählt aus der Gruppe B3, bestehend aus den Verbindungen der Formeln BIX und BX: 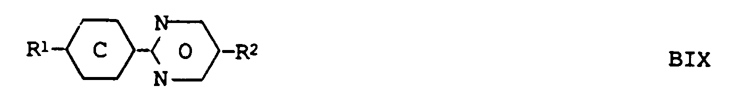 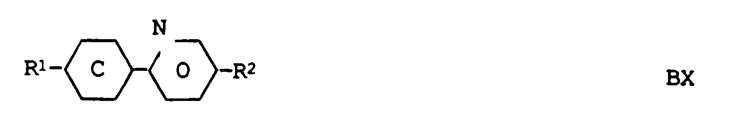 worin R¹ und R² jeweils unabhängig voneinander die für R angegebene Bedeutung haben, und 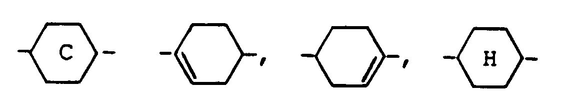 oder 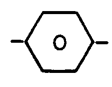 bedeutet.

Besonders bevorzugte Verbindungen der Formel BIII sind diejenigen der folgenden Teilformeln: 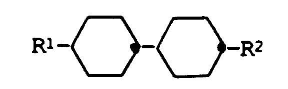 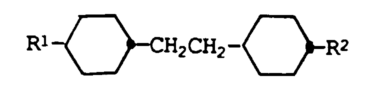 worin
- R¹: CH₃-(CH₂)ₙ-O-, CH₃-(CH₂)ₜ-, trans-H-(CH₂)ᵣ-CH=CH-(CH₂CH₂)ₛ-CH₂O- oder trans-H-(CH₂)ᵣ-CH=CH-(CH₂CH₂)ₛ-,
- R²: CH₃-(CH₂)ₜ-
- n: 1, 2, 3 oder 4
- r: 0, 1, 2 oder 3
- s: 0 oder 1, und
- t: 1, 2, 3 oder 4 ist.

Ferner bevorzugt sind diejenigen der Teilformel, 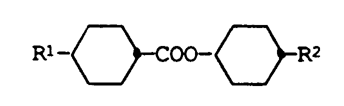 worin R¹ und R² die oben angegebene Bedeutung haben.

Der Anteil der Verbindungen der Formel BIII der oben angegebenen Teilformeln ist vorzugsweise ca. 5 % bis 45 %, insbesondere bevorzugt ca. 10 % bis 35 %. Besonders bevorzugte Verbindungen der Formel BIV sind diejenigen der folgenden Teilformel: 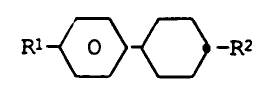 worin
- R¹: CH₃-(CH₂)ₙ-O- oder trans-H-(CH₂)ᵣ-CH=CH-(CH₂CH₂)ₛ-CH₂O- und R² CH₃-(CH₂)ₜ- ist, wobei
- n: 1, 2, 3 oder 4,
- r: 0, 1, 2 oder 3,
- s: 0 oder 1, und
- t: 1, 2, 3 oder 4 ist.

Der Anteil dieser Verbindungen, bzw. der Verbindungen der Formel BIV, ist vorzugsweise ca. 5 % bis 40 %, insbesondere bevorzugt ca. 10 % bis 35 %.

Vorzugsweise enthalten die Mischungen Verbindungen der Formel BIII, insbesondere solche der Teilformel

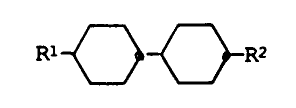

In einer besonders bevorzugten Ausführungsform enthalten die Mischungen gleichzeitig Verbindungen der Formeln BIII und BIV, wobei der Gesamtanteil für Komponenten der Gruppe B1 gewahrt bleibt.

Falls Verbindungen der Formeln BI und/oder BIII vorhanden sind, bedeuten R¹ und R² vorzugsweise jeweils unabhängig voneinander n-Alkyl mit 1 bis 7 C-Atomen oder (trans)-n-Alkenyl mit 3 bis 7 C-Atomen. Z² ist vorzugsweise eine Einfachbindung. BI ist besonders bevorzugt.

Ferner bevorzugt sind erfindungsgemäße Mischungen, die einer oder mehrere Verbindungen der Formel BIV enthalten, worin 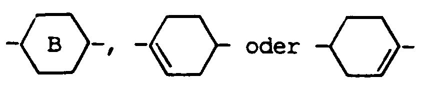 bedeutet und R¹ und R² eine der oben angegebenen bevorzugten Bedeutungen haben, insbesondere bevorzugt n-Alkyl mit 1 bis 7 C-Atomen bedeuten.

In jedem Fall bleibt der Gesamtanteil für Komponenten der Gruppe B1 gewahrt.

Der Anteil der Verbindungen der Gruppe B2 beträgt vorzugsweise ca. 5 % bis 45 %, insbesondere bevorzugt 5 % bis 20 %. Der Anteil (bevorzugte Bereiche) für BV bis BVII ist wie folgt:
- BV: ca. 5 % bis 30 %, vorzugsweise ca. 5 % bis 15 %
- Summe BVI und BVII:: ca. 5 % bis 25 %, vorzugsweise ca. 10 % bis 20 %.

Bevorzugte Verbindungen der Gruppe B2 sind im folgenden angegeben: 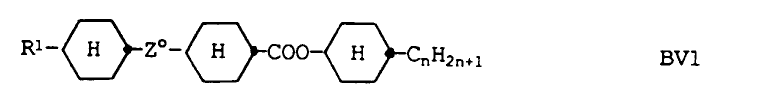 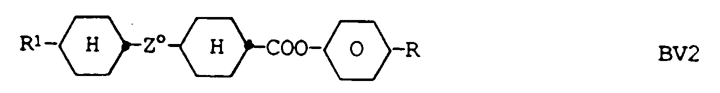 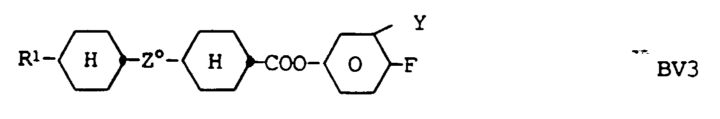 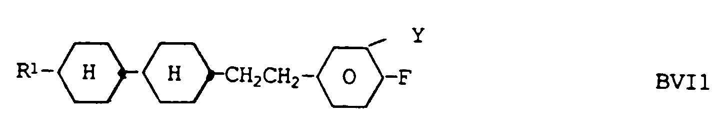 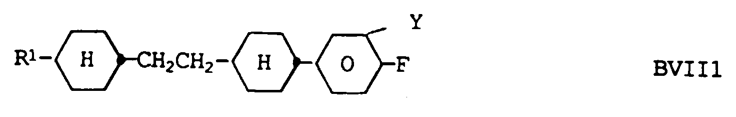 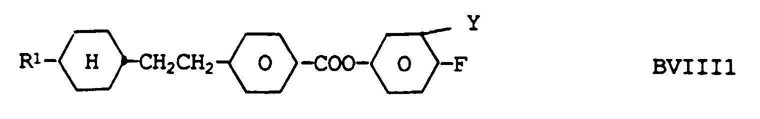 R¹ ist vorzugsweise n-Alkyl mit 1 bis 7 C-Atomen oder (trans)-n-Alkenyl mit 3 bis 7 C-Atomen. Z° ist vorzugsweise eine Einfachbindung. R hat vorzugsweise die oben für R¹ angegebene bevorzugte Bedeutung oder bedeutet Fluor. Y ist vorzugsweise Fluor.

Vorzugsweise enthalten die erfindungsgemäßen Mischungen eine oder mehrere Verbindungen ausgewählt aus der Gruppe bestehend aus BV3, BVI1 und BVII1 in einem Gesamtanteil von ca. 5 bis 35 %.

In einer besonders bevorzugten Ausführungsform enthalten die erfindungsgemäßen Mischungen neben BV3, BVI1, BVII1 und BV2 weitere terminal fluorierte Verbindungen zum Beispiel ausgewählt aus der Gruppe bestehend aus: 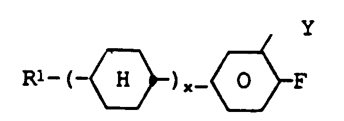 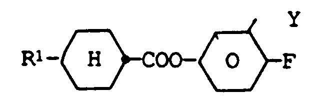 und/oder polare Heterocyclen ausgewählt aus der Gruppe bestehend aus 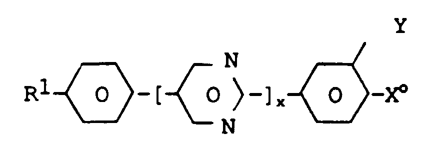 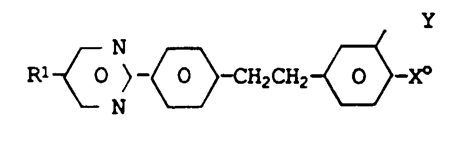 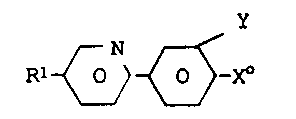 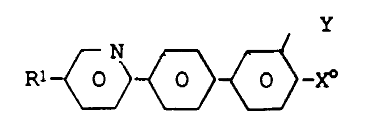 worin R¹ vorzugsweise n-Alkyl mit 1 bis 7 C-Atomen oder (trans)-n-Alkenyl mit 3 bis 7 C-Atomen, x 1 oder 2, X° F, Cl, CF₃, -OCF₃ oder -OCHF₃, und Y H oder F bedeutet. Der Gesamtanteil aller terminal fluorierter Verbindungen beträgt vorzugsweise ca. 5 % bis 65 %, insbesondere ca. 15 % bis 40 %.

Der Anteil der Verbindungen aus Gruppe B3 beträgt vorzugsweise ca. 5 % bis 30 %, insbesondere bevorzugt ca. 10 % bis 20 %. R¹ ist vorzugsweise n-Alkyl oder n-Alkoxy mit jeweils 1 bis 9 C-Atomen. R² ist vorzugsweise n-Alkyl mit 1 bis 9 C-Atomen. Es können jedoch auch analoge Verbindungen mit Alkenyl- bzw. Alkenyloxy-Gruppen eingesetzt werden. Verbindungen der Formel BVIII sind bevorzugt 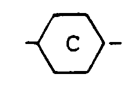 ist vorzugsweise 1,4-Phenylen.

Die erfindungsgemäßen Mischungen enthalten Verbindungen aus mindestens einer der Gruppen B1, B2 und B3. Vorzugsweise enthalten sie eine oder mehrere Verbindungen aus Gruppe B1 und eine oder mehrere Verbindungen aus Gruppe B2 und/oder B3.

Ferner bevorzugt sind Isothiocyanate, z.B. der Formel 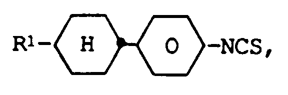 worin R¹ n-Alkyl mit 1 bis 7 C-Atomen oder n-Alkenyl mit 3 bis 7 C-Atomen bedeutet.

In einer besonders bevorzugten Ausführungsform enthalten die erfindungsgemäßen Mischungen vorzugsweise ca. 5 % bis 20 % einer oder mehrerer Verbindungen mit einer dielektrischen Anisotropie von unter -1,5 (Komponente C). Derartige Verbindungen sind bekannt, z.B. Derivate der 2,3-Dicyanhydrochinon oder Cyclohexanderivate mit den Strukturelement 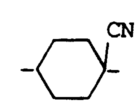 gemäß DE-OS 32 31 707 bzw. DE-OS 34 07 013.

Vorzugsweise werden jedoch Verbindungen mit dem Strukturelement 2,3-Difluor-1,4-phenylen gewählt, z.B. Verbindungen gemäß DE-OS 38 07 801, 38 07 861, 38 07 863, 38 07 864 oder 38 07 908. Besonders bevorzugt sind Tolane mit diesem Strukturelement gemäß der Internationalen Patentanmeldung PCE/DE 88/00133, insbesondere solche der Formeln 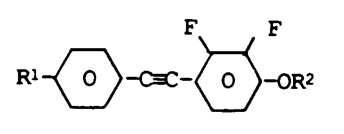 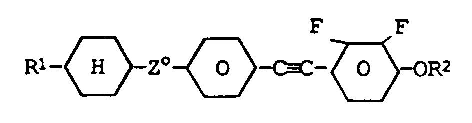 worin R¹ und R² jeweils unabhängig voneinander vorzugsweise n-Alkyl mit 1 bis 7 C-Atomen oder n-Alkenyl mit 3 bis 7 C-Atomen bedeuten und Z° -CH₂CH₂- oder eine Einfachbindung ist, und Phenylpyrimidine der Formel 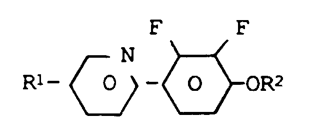 entsprechend DE-OS 38 07 871.

In einer besonders bevorzugten Ausführungsform enthalten die Mischungen ca. 5 % bis 35 %, insbesondere bevorzugt ca. 10 % bis 20 % an flüssigkristalline Tolan-Verbindungen. Hierdurch kann bei geringeren Schichtdicken (ca. 5-6 µm) gearbeitet werden, wodurch die Schaltzeiten deutlich kürzer werden. Besonders bevorzugte Tolane sind im folgenden angegeben: 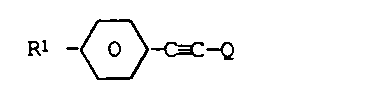 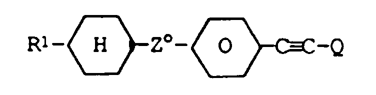
- R¹: ist vorzugsweise n-Alkyl oder n-Alkoxy mit 1 bis 7 C-Atomen,
- Z°: ist -CH₂CH₂- oder eine Einfachbindung,
- Q: ist 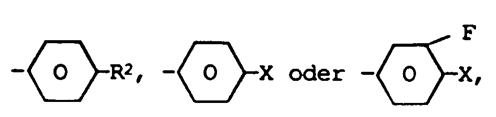 wobei
- X: ist F, Cl oder OCF₃, wobei
- R²: n-Alkyl oder n-Alkoxy mit jeweils 1 bis 7 C-Atomen oder n-Alkenyl oder n-Alkenyloxy mit jeweils 3 bis 7 C-Atomen bedeutet.

Im folgenden weitere besonders bevorzugten Ausführungsformen:
- Komponente A enthält Verbindungen der Formeln IIa, IIb, IIc, IIg und IIi, worin X F bedeutet, und Verbindungen der Formeln IId, IIe, IIf, IIg und IIi, worin X -CF₃, -OCF₃ oder -OCHF₂, bedeutet, und der Anteil der Cyanverbindungen in Komponente A beträgt 0 bis 50 Gew.%, vorzugsweise 0 bis 25 Gew.%, insbesondere 20 bis 45 Gew.%,
- bevorzugte Cyanverbindungen sind die Verbindungen der Formeln C1 bis C4 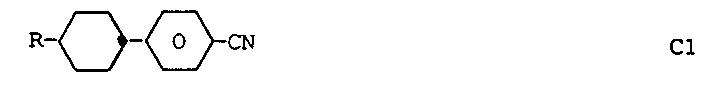 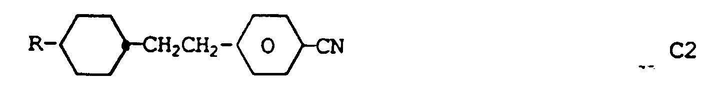 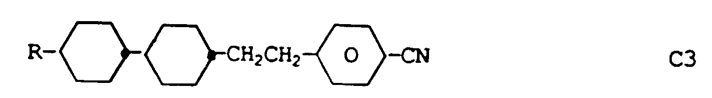 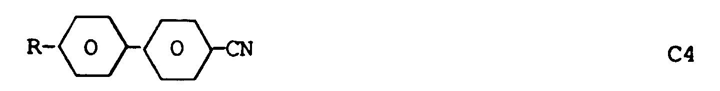
- Komponente A enthält eine oder mehrere Verbindungen der Formel IIa1-IIa3, IIc1-IIc4, IId1-IId3, IIf1-IIf4 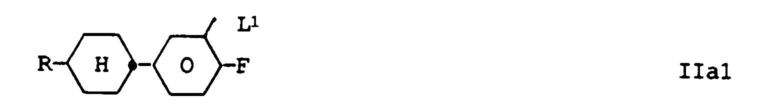 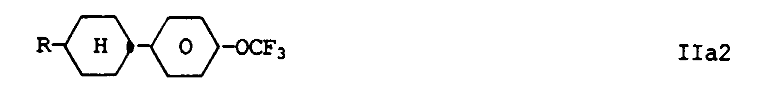 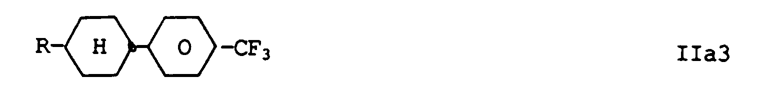 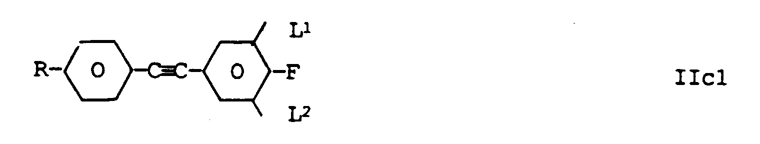 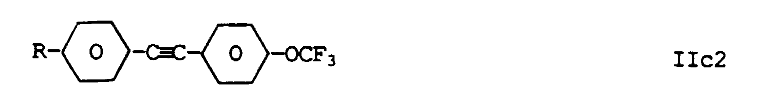 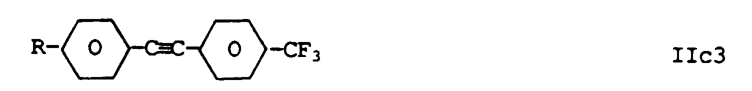 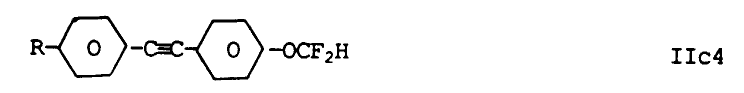 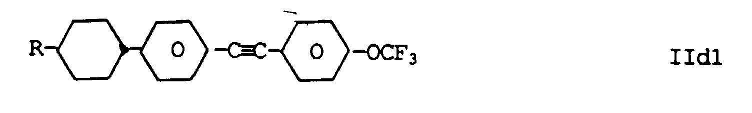 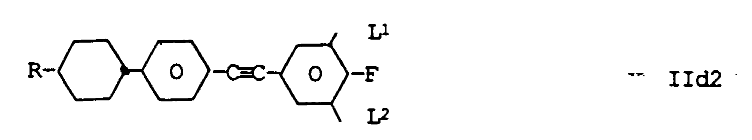 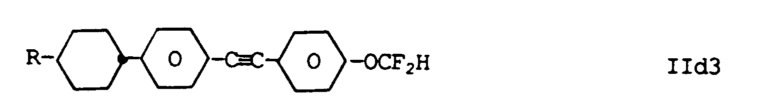 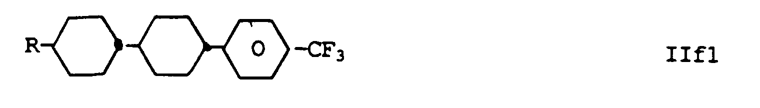 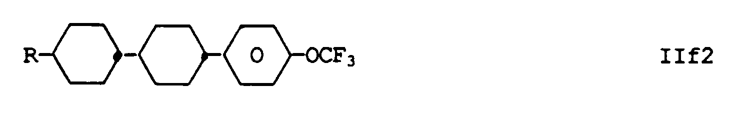 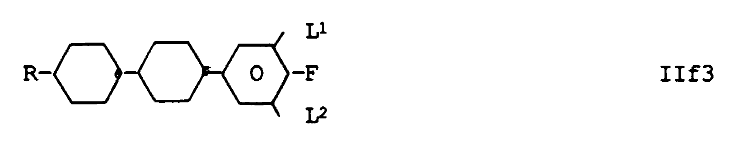 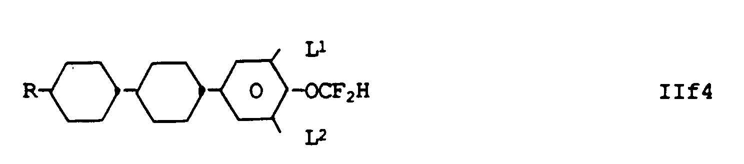 worin R n-Alkyl, n-Alkoxy oder n-Alkenyl mit 1-9 C-Atomen ist
- Komponente A enthält weiterhin eine oder mehrere Verbindungen der Formel IIg1-IIg3 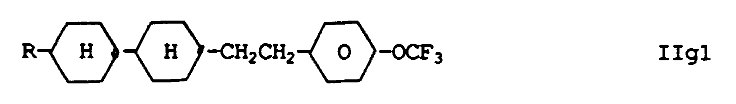 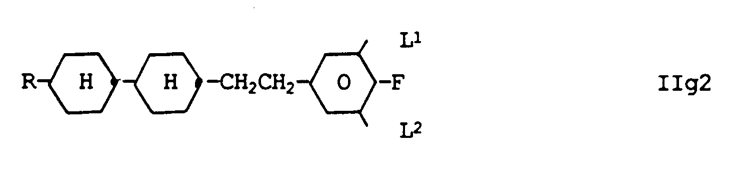 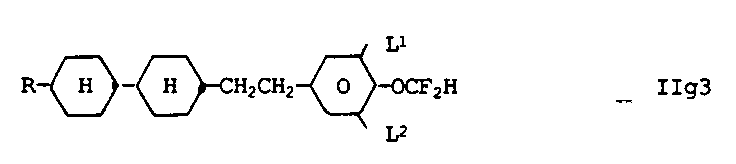 worin R CₙH₂ₙ₊₁ mit n = 1-9 ist.
- Komponente A enthält neben den Verbindungen der Formeln IIa bis IIk eine oder mehrere Verbindungen der Formel 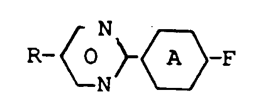 worin
   R n-Alkyl, n-Alkoxy oder n-Alkenyl mit 1-9 C-Atomen, und 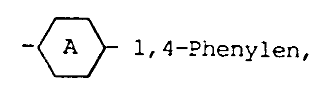 2- oder 3-Fluor-1,4-phenylen bedeutet.
- X bedeutet F, Cl, CF₃, -OCF₃, OCHF₂ oder CHF₂,
- Komponente B enthält eine oder mehrere Verbindungen ausgewählt aus der Gruppe bestehend aus I1 bis I8: 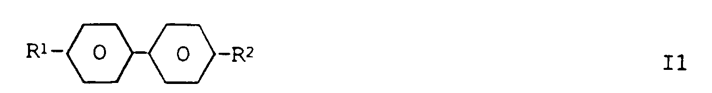 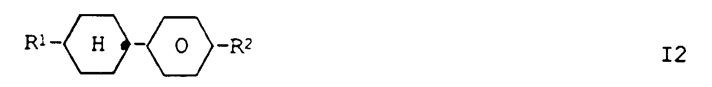 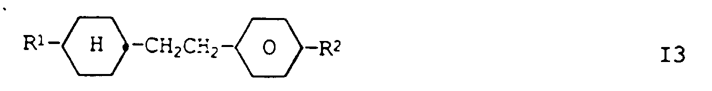 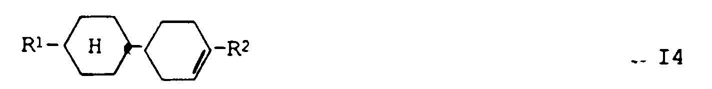 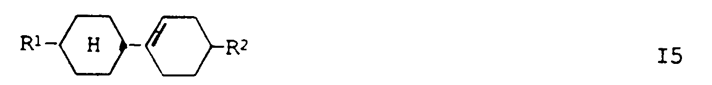 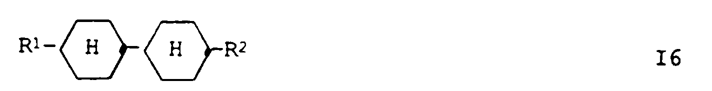 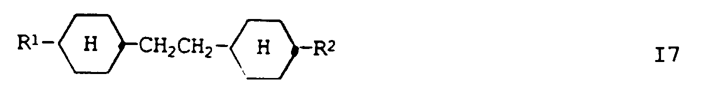 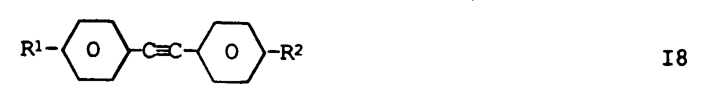 worin R¹ und R² die in Anspruch 1 angegebene Bedeutung haben.
- Komponente B enthält zusätzlich eine oder mehrere Verbindungen ausgewählt aus der Gruppe bestehend aus I9 bis I24: 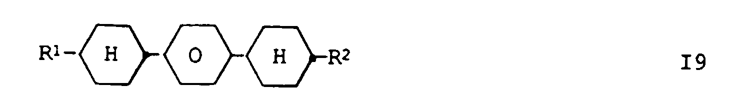 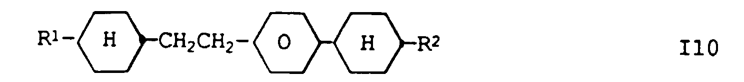 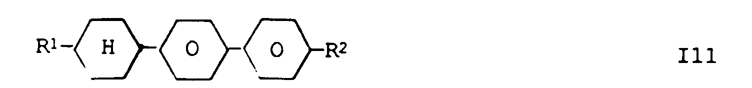 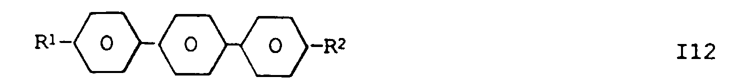 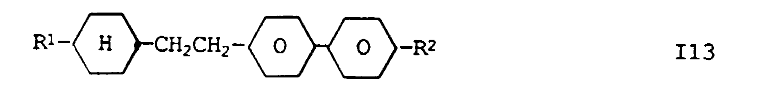 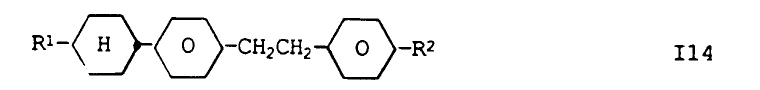 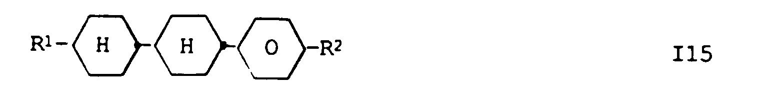 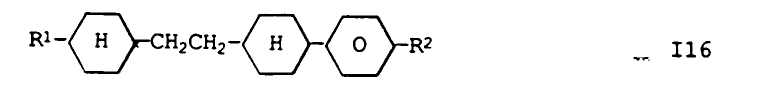 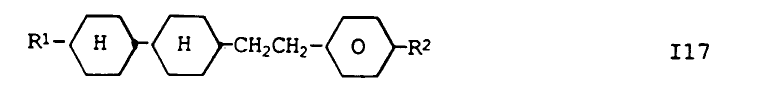 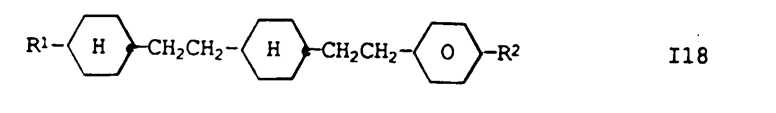 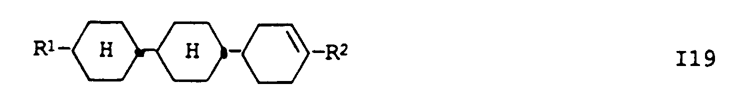 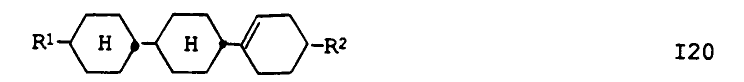 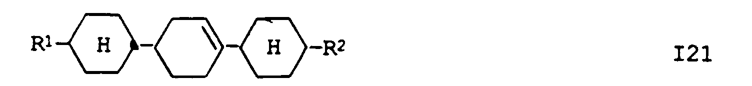 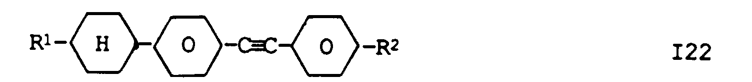 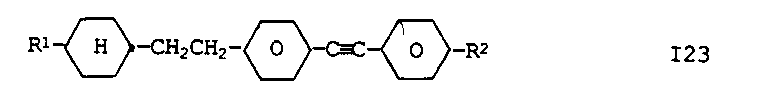 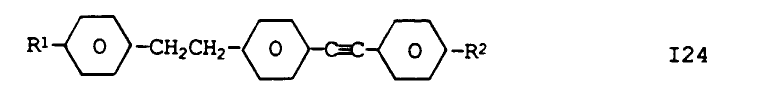 worin R¹ und R² die in Anspruch 1 angegebene Bedeutung haben und die 1,4-Phenylengruppen in I9 bis I18 jeweils unabhängig voneinander auch durch Fluor ein- oder mehrfach substituiert sein können.
- Komponente B enthält zusätzlich eine oder mehrere Verbindungen ausgewählt aus der Gruppe bestehend aus I25 bis I29: 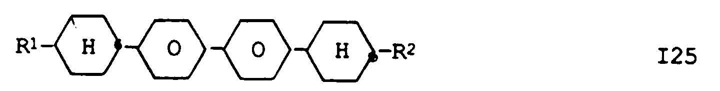 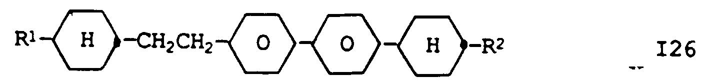 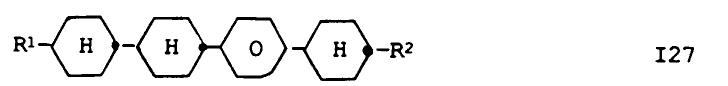 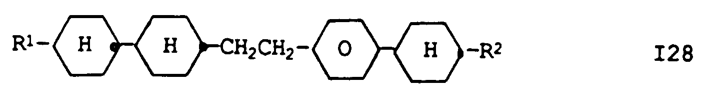 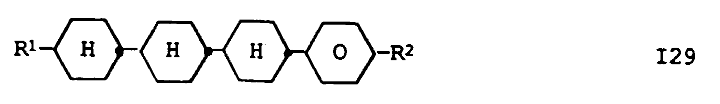 worin R¹ und R² die in Anspruch 1 angegebene Bedeutung haben und die 1,4-Phenylengruppen in I25 bis I29 jeweils unabhängig voneinander auch durch Fluor ein- oder mehrfach substituiert sein können.
- Komponente B enthält eine oder mehrere Verbindungen ausgewählt aus der Gruppe bestehend aus I30 und I31: 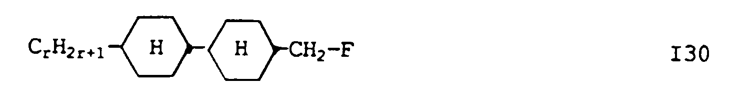 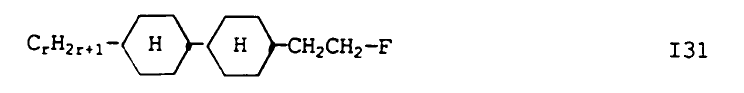 worin CᵣH₂ᵣ₊₁ eine geradkettige Alkylgruppe mit bis zu 7 C-Atomen ist.
- die Flüssigkristallmischung enthält neben den Komponenten A, B und C zusätzlich eine oder mehrere Verbindungen ausgewählt aus der Gruppe bestehend aus III und IV: 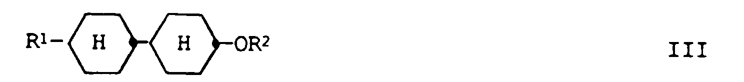 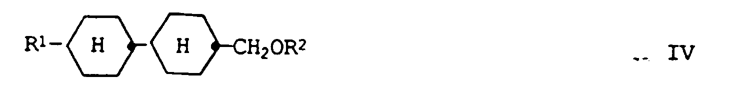 worin R¹ und R² die in Anspruch 1 angegebene Bedeutung haben.
- die Flüssigkristallmischung enthält neben den Komponenten A, B und C zusätzlich eine oder mehrere Verbindungen ausgewählt aus der Gruppe bestehend aus V und VI: 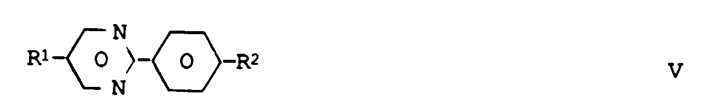 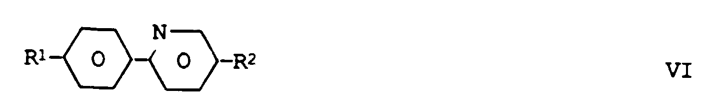 worin R¹ und R² die in Anspruch 1 angegebene Bedeutung haben.
- die Komponente C enthält eine oder mehrere Verbindungen ausgewählt aus der Gruppe bestehend aus VII bis XI: 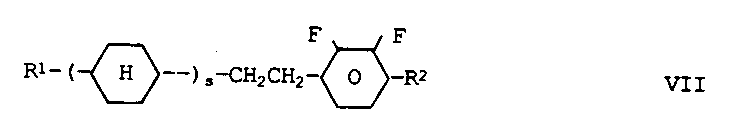 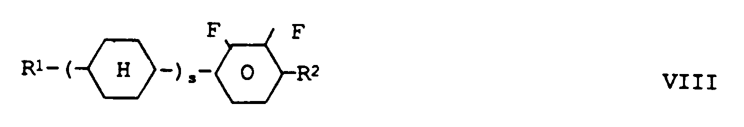 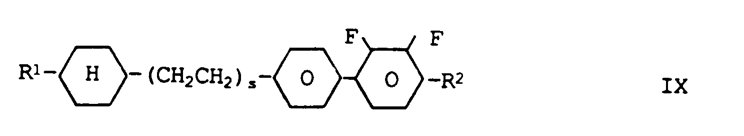 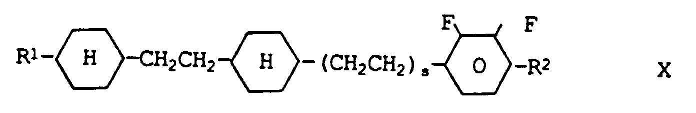 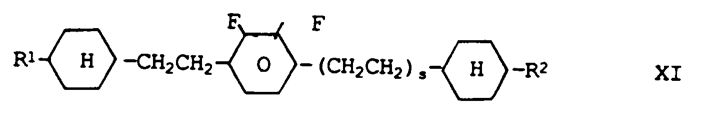 worin R¹ und R² die in Anspruch 1 angegebene Bedeutung haben und s 0 oder 1 ist.
- die Komponente B enthält eine oder mehrere Verbindungen ausgewählt aus der Gruppe bestehend aus XII bis XIV: 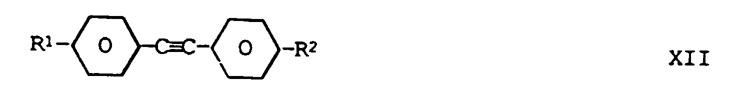 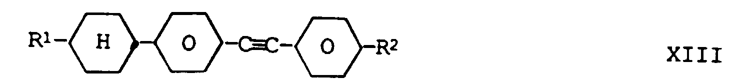 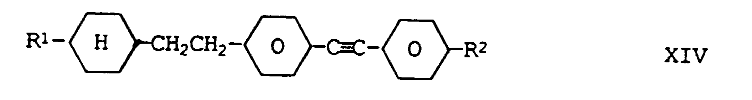 worin R¹ und R² die in Anspruch 1 angegebene Bedeutung haben.

Bevorzugt sind Mischungen, welche ausschließlich Verbindungen der Formeln IIa bis IIh (Gruppe A) und Komponente C enthalten, d.h. keine Verbindungen der Komponente B.

Die bevorzugten Mischungen enthaltend terminal halogenisierte Verbindungen der Formeln IIa bis IIk (X = F, Cl, -CF₃, -CHF₂, -OCF₃ oder -OCHF₃) weisen besonders günstige Parameterkombinationen und gleichzeitig ein breites d/p-Fenster auf.

Erfindungsgemäße Flüssigkristallmischungen, deren Komponente A mindestens eine Verbindung der Formel 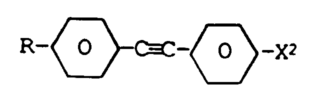 worin
- R: CₙH₂ₙ₊₁, -OCₙH₂ₙ₊₁, 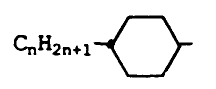 oder 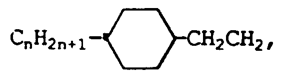
- n: eine ganze Zahl von 1-15, und
- X²: F, Cl oder OCF₃
bedeuten,
und eine Verbindung der Formeln IId2-IId5, IIa1-IIa3 und IIf1-IIf3 enthalten, weisen günstige Werte für die Schwellenspannung V_{10/0/20} und die Fließviskosität auf und sind durch relativ hohe oder hohe Werte für die optische Anisotropie gekennzeichnet. Da wegen des relativ hohen bzw. hohen Wertes für Δn die Schichtdicke d relativ klein gewählt werden kann, sind mit diesen besonders bevorzugten Mischungen betriebene Displays i.a. durch günstige Werte für die Ein- und/oder Ausschaltzeiten tₒₙ und/ oder t_{off} gekennzeichnet. Diese Mischungen sind bevorzugt.

Für die Komponente D stehen dem Fachmann eine Vielzahl, zum Teil kommerziell erhältlicher chiraler Dotierstoffe zur Verfügung. Deren Wahl ist an sich nicht kritisch.

Die in den erfindungsgemäßen SFA's verwendeten Flüssigkristallmischungen sind dielektrisch positiv mit Δε ≥ 1. Besonders bevorzugt sind Flüssigkristallmischungen mit Δε ≥ 3 und ganz besonders solche mit Δε ≥ 5.

Die erfindungsgemäßen Flüssigkristallmischungen weisen günstige Werte für die Schwellenspannung V_{10/0/20} und für die Fließviskosität η auf. Ist der Wert für den optischen Wegunterschied d.Δn vorgegeben, wird der Wert für die Schichtdicke d durch die optische Anisotropie Δn bestimmt. Insbesondere bei relativ hohen oder hohen Werten für d.Δn ist i.a. die Verwendung erfindungsgemäßer Flüssigkristallmischungen mit einem relativ hohen bzw. hohen Wert für die optische Anisotropie bevorzugt, da dann der Wert für d relativ klein gewählt werden kann, was zu günstigeren Werten für die Schaltzeiten führt. Aber auch solche erfindungsgemäßen Flüssigkristallanzeigen, die erfindungsgemäße Flüssigkristallmischungen mit kleineren Werten für Δn enthalten, sind durch vorteilhafte Werte für die Schaltzeiten gekennzeichnet. Die erfindungsgemäßen Flüssigkristallmischungen sind weiter durch vorteilhafte Werte für die Steilheit der elektrooptischen Kennlinie gekennzeichnet und können mit hohen Multiplexraten betrieben werden. Darüberhinaus weisen die erfindungsgemäßen Flüssigkristallmischungen eine hohe Stabilität und günstige Werte für den elektrischen Widerstand und die Frequenzabhängigkeit der Schwellenspannung auf. Die erfindungsgemäßen Flüssigkristallanzeigen weisen einen großen Arbeitstemperaturbereich und eine gute Winkelabhängigkeit des Kontrastes auf.

Der Aufbau der erfindungsgemäßen Flüssigkristall-Anzeigeelemente aus Polarisatoren, Elektrodengrundplatten und Elektroden mit einer solchen Oberflächenbehandlung, daß die Vorzugsorientierung (Direktor) der jeweils daran angrenzenden Flüssigkristall-Moleküle von der einen zur anderen Elektrode gewöhnlich um betragsmäßig 160° bis 360° gegeneinander verdreht ist, entspricht der für derartige Anzeigeelemente üblichen Bauweise. Dabei ist der Begriff der üblichen Bauweise hier weit gefaßt und umfaßt auch alle Abwandlungen und Modifikationen der Supertwistzelle, insbesondere auch Matrix-Anzeigeelemente sowie die zusätzliche Magnete enthaltenden Anzeigeelemente nach der DE-OS 2 748 738. Der Oberflächentiltwinkel an den beiden Trägerplatten kann gleich oder verschieden sein. Gleiche Tiltwinkel sind bevorzugt.

Ein wesentlicher Unterschied der erfindungsgemäßen Anzeigeelemente zu den bisher üblichen auf der Basis der verdrillten nematischen Zelle besteht jedoch in der Wahl der Flüssigkristallkomponenten der Flüssigkristallschicht.

Die Herstellung der erfindungsgemäß verwendbaren Flüssigkristallmischungen erfolgt in an sich üblicher Weise.

In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe zugesetzt werden.

Die folgenden Beispiele sollen die Erfindung erläutern, ohne sie zu begrenzen.

Es bedeutet:
- S-N: Phasenübergangs-Temperatur smektisch-nematisch,
- Klp.: Klärpunkt,
- Visk.: Viskosität (m Pa.s),
- Tₒₙ: Zeit vom Einschalten bis zur Erreichung von 90 % des maximalen Kontrastes
- T_{off}: Zeit vom Ausschalten bis zur Erreichung von 10 % des maximalen Kontrastes.

Dis SFA wird im Multiplexbetrieb angesteuert (Multiplexverhältnis 1:100, Bias 1:11, Betriebsspannung 18,5 Volt).

Vor und nachstehend sind alle Temperaturen in °C angegeben. Die Prozentzahlen sind Gewichtsprozente. Die Werte für die Schaltzeiten und Viskositäten beziehen sich auf 20 °C.

### Beispiel 1

Ein SFA vom Typ STN mit folgenden Parametern:

| | |
|---|---|
| Verdrillungswinkel | 240 ° |
| Anstellwinkel | 5 ° |
| d.Δn | 1,026 |

enthaltend eine Flüssigkristallmischung mit folgenden Parametern:

| | |
|---|---|
| Klärpunkt: | 84 °C |
| Δn: | 0,1496 |
| Δε: | +7,2 |
| Viskosität (20 °C): | 15 mPa.s |

und bestehend aus einer Basismischung aus

| | |
|---|---|
| 20,0 % | PCH-3 |
| 14,0 % | PCH-5F |
| 6,0 % | PCH-6F |
| 4,0 % | PCH-301 |
| 6,0 % | PTP-20F |
| 5,0 % | PTP-40F |
| 5,0 % | CCP-20CF₃ |
| 5,0 % | CCP-30CF₃ |
| 5,0 % | CCP-40CF₃ |
| 5,0 % | CCP-50CF₃ |
| 8,0 % | CPTP-50CF₃ |
| 5,0 % | CPTP-301 |
| 6,0 % | CPTP-302 |
| 6,0 % | CPTP-303 |

und einer chiralen Komponente (p-(p-n-Hexylbenzoyloxy)-benzoesäure-2-octylester) zeigt folgende Schwellenspannungen: V_{10/0/20} 2,01 Volt, V_{90/0/20} 2,19 Volt.

### Beispiel 2

Ein SFA entsprechend Beispiel 1 enthält eine Flüssigkristallmischung bestehend aus

| | | |
|---|---|---|
| PCH-5F | 7,0 % | Klärpunkt 86 °C |
| PCH-6F | 7,0 % | Δn 0,1406 |
| EHP-3F.F | 11,0 % | |
| EHP-5F.F | 11,0 % | |
| BCH-3F.F | 13,0 % | |
| BCH-5F.F | 13,0 % | |
| CPTP-30CF₃ | 5,0 % | |
| CPTP-50CF₃ | 5,0 % | |
| ECCP-3F.F | 9,0 % | |
| ECCP-5F.F | 9,0 % | |
| PTP-20F | 5,0 % | |
| PTP-40F | 5,0 % | |

und der chiralen Komponente aus Beispiel 1 und weist folgende Schwellenspannung auf:
V_{10/0/20} 2,04 Volt.

### Beispiel 3

Ein SFA entsprechend Beispiel 1 enthält eine Flüssigkristallmischung bestehend aus

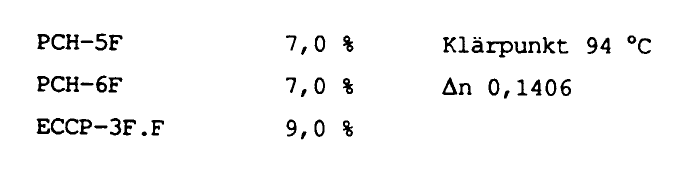

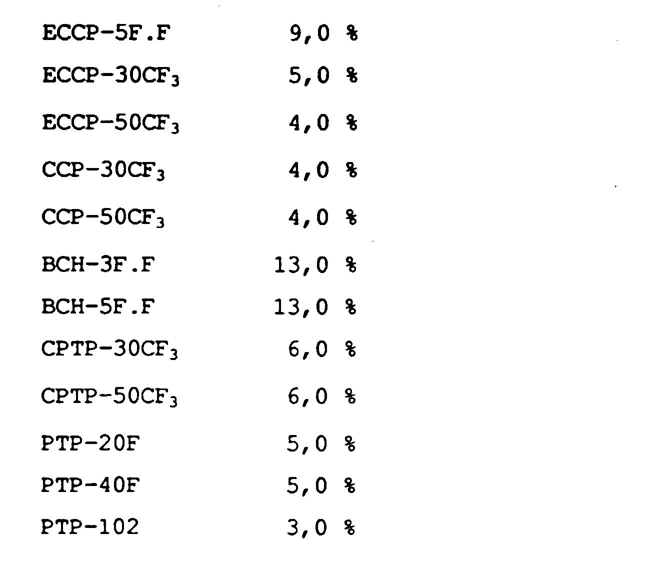

und der chiralen Komponente aus Beispiel 1 und weist folgende Schwellenspannung auf:
V_{10/0/20} 2,48 Volt.

### Beispiel 4

Ein SFA entsprechend Beispiel 1 enthält eine Flüssigkristallmischung bestehend aus

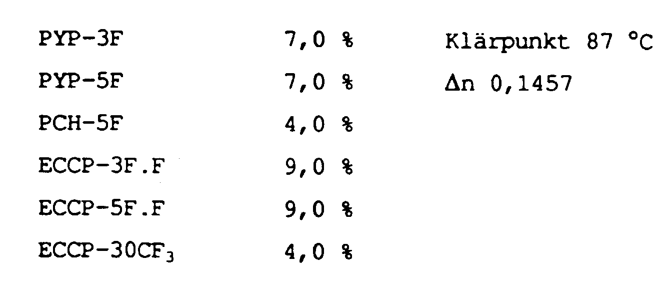

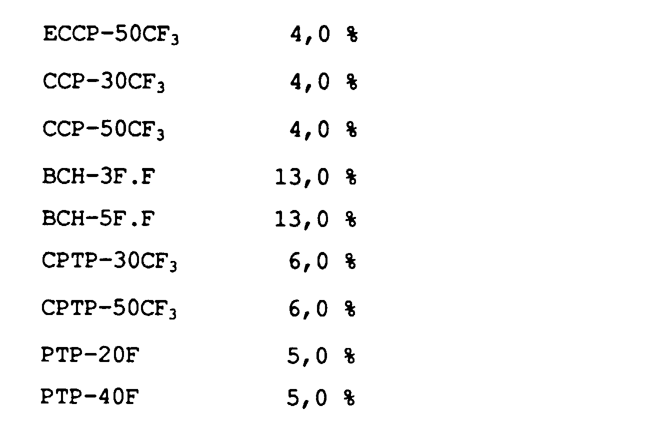

und der chiralen Komponente aus Beispiel 1 und weist folgende Schwellenspannung auf:
V_{10/0/20} 2,25 Volt.

### Beispiel 5

Ein SFA entsprechend Beispiel 1 enthält eine Flüssigkristallmischung bestehend aus

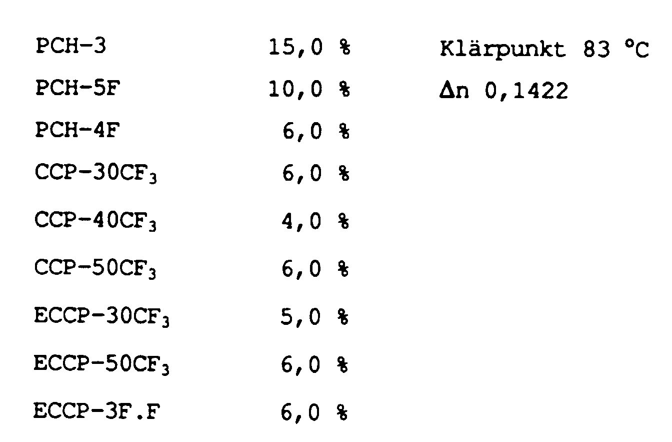

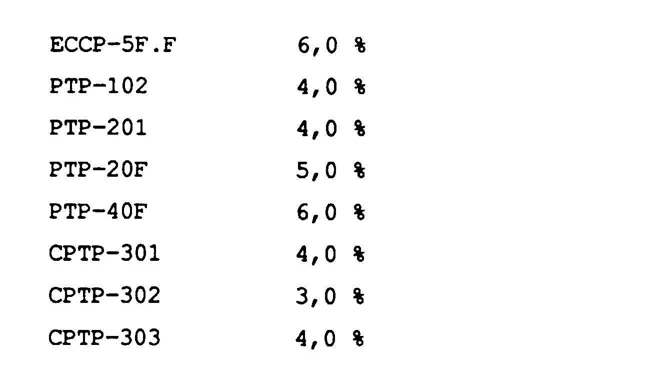

und der chiralen Komponente aus Beispiel 1 und weist folgende Schwellenspannung auf:
V_{10/0/20} 2,18 Volt.

### Beispiel 6

Ein SFA entsprechend Beispiel 1 enthält eine Flüssigkristallmischung bestehend aus

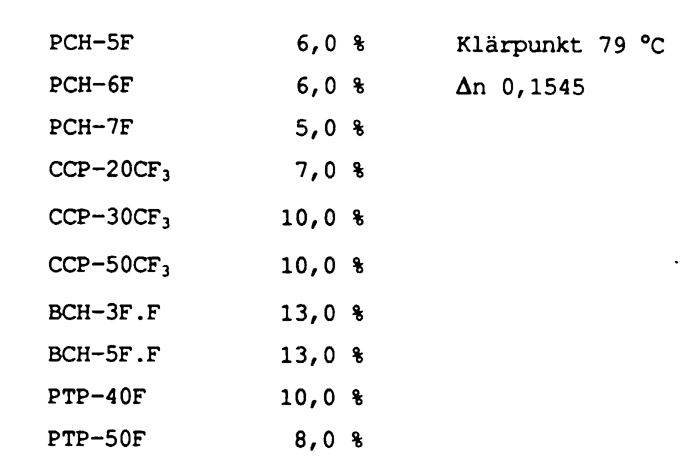

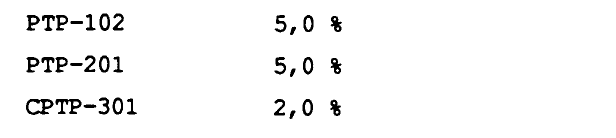

und der chiralen Komponente aus Beispiel 1 und weist folgende Schwellenspanung auf:
V_{10/0/20} 2,50 Volt.

### Beispiel 7

Ein SFA entsprechend Beispiel 1 enthält eine Flüssigkristallmischung bestehend aus

| | | |
|---|---|---|
| PTP-40F | 6,0 % | Klärpunkt 79 °C |
| K9 | 6,0 % | Viskosität (20 °C) 15 mm²s⁻¹ |
| PCH-3 | 12,0 % | Δn 0,1399 |
| PCH-5 | 10,0 % | |
| PCH-5F | 7,0 % | |
| PCH-301 | 10,0 % | |
| CCP-30CF₃ | 7,0 % | |
| CCP-5OCF₃ | 6,0 % | |
| ECCP-31 | 6,0 % | |
| ECCP-32 | 6,0 % | |
| ECCP-33 | 6,0 % | |
| ECCP-35 | 5,0 % | |
| PTP-201 | 4,0 % | |
| PTP-102 | 4,0 % | |
| CPTP-302 | 5,0 % | |

und der chiralen Komponente aus Beispiel 1 und weist folgende Schwellenspannung auf:
V_{10/0/20} 2,22 Volt.

### Beispiel 8

Ein SFA entsprechend Beispiel 1 enthält eine Flüssigkristallmischung bestehend aus

| | | |
|---|---|---|
| PCH-5F | 6,0 % | Klärpunkt 84 °C |
| PCH-6F | 6,0 % | Δn 0,1401 |
| PCH-7F | 7,0 % | |
| PTP-102 | 4,0 % | |
| PTP-201 | 5,0 % | |
| PTP-40F | 8,0 % | |
| CCP-20CF₃ | 6,0 % | |
| CCP-30CF₃ | 6,0 % | |
| CCP-40CF₃ | 6,0 % | |
| CCP-50CF₃ | 6,0 % | |
| ECCP-30CF₃ | 4,0 % | |
| BCH-3F.F | 13,0 % | |
| BCH-5F.F | 13,0 % | |
| CPTP-30CF₃ | 5,0 % | |
| CPTP-50CF₃ | 5,0 % | |

und der chiralen Komponente aus Beispiel 1 und weist folgende Schwellenspannung auf:
V_{10/0/20} 2,39 Volt.

### Beispiel 9

Ein SFA entsprechend Beispiel 1 enthält eine Flüssigkristallmischung bestehend aus

| | | |
|---|---|---|
| PCH-3 | 20,0 % | Klärpunkt 82 °C |
| PCH-5 | 8,0 % | Δn 0,1506 |
| PCH-5F | 12,0 % | Viskosität (20 °C) 16 mm²s⁻¹ |
| PCH-301 | 4,0 % | |
| PTP-20F | 6,0 % | |
| PTP-40F | 5,0 % | |
| CCP-20CF₃ | 4,0 % | |
| CCP-30CF₃ | 4,0 % | |
| CCP-50CF₃ | 4,0 % | |
| ECCP-30CF₃ | 5,0 % | |
| ECCP-50CF₃ | 5,0 % | |
| CPTP-301 | 5,0 % | |
| CPTP-302 | 5,0 % | |
| CPTP-303 | 5,0 % | |
| PTP-102 | 4,0 % | |

und der chiralen Komponente aus Beispiel 1 und weist folgende Schwellenspannung auf:
V_{10/0/20} 2,13 Volt.
- PCH-53:: trans-1-p-Propylphenyl-4-pentylcyclohexan
- I-32:: 1-(trans-4-Propylcyclohexyl)-2-(4'-ethyl-2'-fluorbiphenyl-4-yl)-ethan
- I-35:: 1-(trans-4-Propylcyclohexyl)-2-(4'-pentyl-2'-fluorbiphenyl-4-yl)-ethan
- BCH-32:: 4-Ethyl-4'-(trans-4-propylcyclohexyl)-biphenyl
- BCH-52 :: 4-Ethyl-4'-(trans-4-pentylcyclohexyl)-biphenyl
- CCH-303:: trans,trans-4-Propoxy-4'-propylcyclohexyl-cyclohexan
- CCH-501:: trans,trans-4-Methoxy-4'-pentylcyclohexylcyclohexan
- CH-35:: trans,trans-4-Propylcyclohexylcyclohexancarbonsäure-trans-4-pentylcyclohexylester
- CH-43:: trans,trans-4-Butylcyclohexylcyclohexancarbonsäure-trans-4-propylcyclohexylester
- CH-45:: trans,trans-4-Butylcyclohexylcyclohexancarbonsäure-trans-4-pentylcyclohexylester
- PCH-302:: trans-1-p-Ethoxyphenyl-4-propylcyclohexan
- PCH-303:: trans-1-p-Propoxyphenyl-4-propylcyclohexan
- PCH-30:: trans-1-p-Butoxyphenyl-4-propylcyclohexan
- CCH-502:: trans,trans-4-Ethoxy-4'-pentylcyclohexylcyclohexan
- ECCP-32:: 1-[trans-4-(trans-4-Propylcyclohexyl)-cyclohexyl]-2-(p-ethylphenyl)-ethan
- ECCP-31:: 1-[trans-4-(trans-4-Propylcyclohexyl)-cyclohexyl]-2-(p-methylphenyl)-ethan
- ECCP-35:: 1-[trans-4-(trans-4-Propylcyclohexyl)-cyclohexyl]-2-(p-pentylphenyl)-ethan
- PCH-501:: trans-1-p-Methoxyphenyl-4-pentylcyclohexan
- PCH-502:: trans-1-p-Ethoxyphenyl-4-pentylcyclohexan
- CP-33:: trans,trans-4-Propylcyclohexylcyclohexan-carbonsäure-p-propylphenylester
- CP-35:: trans,trans-4-Propylcyclohexylcyclohexan-carbonsäure-p-pentylphenylester
- CP-43:: trans,trans-4-Butylcyclohexylcyclohexan-carbonsäure-p-propylphenylester
- CP-45:: trans,trans-4-Butylcyclohexylcyclohexan-carbonsäure-p-pentylphenylester
- PTP-40F:: 4-Butoxy-4'-fluortolan
- PTP-50F:: 4-Pentoxy-4'-fluortolan
- PTP-20F:: 4-Ethoxy-4'-fluortolan
- PCH-301:: trans-1-p-Methoxyphenyl-4-propylcyclohexan
- CCH-301:: trans,trans-4-Methoxy-4'-propylcyclohexylcyclohexan
- CBC-33F:: 4,4'-Bis-(trans-4-propylcyclohexyl)-2-fluorbiphenyl
- CBE-55F:: 4,4'-Bis-(trans-4-pentylcyclohexyl)-2-fluorbiphenyl
- CBC-53F:: 4-(trans-4-Pentylcyclohexyl)-4'-(trans-4-propylcyclohexyl)-2-fluorbiphenyl
- CBC-33:: 4,4'-Bis-(trans-4-propylcyclohexyl)-biphenyl
- CBE-55:: 4,4'-Bis-(trans-4-pentylcyclohexyl)-biphenyl
- CBC-53:: 4-(trans-4-Pentylcyclohexyl)-4'-(trans-4-propylcyclohexyl)-biphenyl
- ECCP-33:: 1-[trans-4-(trans-4-Propylcyclohexyl)-cyclohexyl]-2-(p-propylphenyl)-ethan
- CCH-51F:: trans,trans-4-Fluormethyl-4'-pentylcyclohexylcyclohexan
- CCH-31F:: trans,trans-4-Fluormethyl-4'-propylcyclohexylcyclohexan
- PTP-102:: 4-Methyl-4'-ethoxy-tolan
- PTP-201:: 4-Methoxy-4'-ethyl-tolan
- CPTP-301:: 4-(trans-4-Propylcyclohexyl)-4'-methoxy-tolan
- CPTP-302:: 4-(trans-4-Propylcyclohexyl)-4'-ethoxy-tolan
- CPTP-303:: 4-(trans-4-Propylcyclohexyl)-4'-propoxy-tolan
- PCH-5F:: trans-1-p-Fluorphenyl-4-pentylcyclohexan
- PCH-6F:: trans-1-p-Fluorphenyl-4-hexylcyclohexan
- PCH-4F:: trans-1-p-Fluorphenyl-4-butylcyclohexan
- PCH-7F:: trans-1-p-Fluorphenyl-4-heptylcyclohexan
- EPCH-20CF₃:: 1-(trans-4-Ethylcyclohexyl)-2-(p-trifluormethoxyphenyl)-ethan
- EPCH-30CF₃:: 1-(trans-4-Propylcyclohexyl)-2-(p-trifluormethoxyphenyl)-ethan
- EPCH-50CF₃:: 1-(trans-4-Pentylcyclohexyl)-2-(p-trifluormethoxyphenyl)-ethan
- EPCH-70CF₃:: 1-(trans-4-Heptylcyclohexyl)-2-(p-trifluormethoxyphenyl)-ethan
- PCH-30CF₃:: trans-1-p-Trifluormethoxyphenyl-4-propylcyclohexan
- PCH-50CF₃:: trans-1-p-Trifluormethoxyphenyl-4-pentylcyclohexan
- ECCP-30CF₃:: 1-[trans-4-(trans-4-Propylcyclohexyl)-cyclohexyl]-2-(p-trifluormethoxyphenyl)-ethan
- ECCP-50CF₃:: 1-[trans-4-(trans-4-Pentylcyclohexyl)-cyclohexyl]-2-(p-trifluormethoxyphenyl)-ethan
- CCP-20CF₃:: p-(trans-4-(trans-4-Ethylcyclohexyl)-cyclohexyl]trifluormethoxybenzol
- CCP-30CF₃:: p-[trans-4-(trans-4-Propylcyclohexyl)-cyclohexyl]-trifluormethoxybenzol
- CCP-40CF3:: P-[trans-4-(trans-4-Butylcyclohexyl)-cyclohexyl]trifluormethoxybenzol
- CCP-50CF₃:: p-[trans-4-(trans-4-Pentylcyclohexyl)-cyclohexyl]-trifluormethoxybenzol
- BCH-30CF₃:: 4-Trifluormethoxy-4'-(trans-4-propylcyclohexyl)-biphenyl
- ECCP-3F.F:: 1-[trans-4-(trans-4-Propylcyclohexyl)-cyclohexyl]-2-(3,4-difluorphenyl)-ethan
- ECCP-5F.F:: 1-[trans-4-(trans-4-Pentylcyclohexyl)-cyclohexyl]-2-(2,3-difluorphenyl)-ethan
- CCP-3F.F:: 4-[trans-4-(trans-4-Propylcyclohexyl)-cyclohexyl]-1,2-difluorbenzol
- CCP-5F.F:: 4-[trans-4-(trans-4-Pentylcyclohexal)-cyclohexyl]-1,2-difluorbenzol
- D-302FF:: 2,3-Difluor-4-ethoxyphenyl-trans-4-propylcyclohexyl-carboxylat
- D-502FF:: 2,3-Difluor-4-ethoxyphenyl-trans-4-pentylcyclohexyl-carboxylat
- CCP-3F:: 4-[trans-4-(trans-4-Propylcyclohexyl)-cyclohexyl]-fluorbenzol
- ECCP-3F:: 1-[trans-4-(trans-4-Propylcyclohexyl)-cyclohexyl]-2-(p-fluorphenyl)-ethan
- ECCP-5F:: 1-[trans-4-(trans-4-Pentylcyclohexyl)-cyclohexyl]-2-(p-fluorphenyl)-ethan
- CP-3F:: trans-4-(trans-4-Propylcyclohexyl)-cyclohexancarbonsäure-(p-fluorphenylester)
- CP-5F:: trans-4-(trans-4-Pentylcyclohexyl)-cyclohexancarbonsäure-(p-fluorphenylester)
- PYP-5F:: 2-p-Fluorphenyl-5-pentylpyrimidin
- PYP-6F:: 2-p-Fluorphenyl-5-hexylpyrimidin
- PYP-7F:: 2-p-Fluorphenyl-5-heptylpyrimidin
- PYP-30CF₃:: 2-p-Trifluormethoxyphenyl-5-propylpyrimidin
- PYP-50CF₃:: 2-p-Trifluormethoxyphenyl-5-pentylpyrimidin
- PYP-70CF₃:: 2-p-Trifluormethoxyphenyl-5-heptylpyrimidin
- PCH-3:: p-trans-4-Propylcyclohexyl-benzonitril
- PCH-4:: p-trans-4-Butylcyclohexyl-benzonitril
- PCH-5:: p-trans-4-Pentylcyclohexyl-benzonitril
- ECCP-3:: 1-[trans-4-(trans-4-Propylcyclohexyl)-cyclohexyl]-2-(p-cyanphenyl)-ethan
- ECCP-3CF₃:: 1-[trans-4-(trans-4-Propylcycloheyl)-cycloheyl]-2-(p-trifluormethylphenyl)-ethan
- ECCP-5CF₃:: 1-[trans-4-(trans-4-Pentylcyclohexyl)-cyclohexyl]-2-(p-Trifluormethylphenyl)-ethan
- PYP-5N.F:: 2-(3-Fluor-4-cyanphenyl)-5-pentylpyrimidin
- PYP-7N.F:: 2-(3-Fluor-4-cyanphenyl)-5-heptylpyrimidin
- PCH-30CF₂:: trans-1-p-Difluormethoxyphenyl-4-propylcyclohexan
- PCH-50CF₂:: trans-1-p-Difluormethoxyphenyl-4-pentylcyclohexan
- PCH-3-OCF₂:: trans-1-p-Difluormethoxyphenyl-4-propylcyclohexan
- BCH-5.F₂:: 4-(trans-4-Pentylcyclohexyl)-2'-fluor-4'-ethylbiphenyl
- K6:: 4-Ethyl-4'-cyanobiphenyl
- K9:: 4-Propyl-4'-cyanobiphenyl
- PTP-35:: 4-Propyl-4'-pentyltolan
- ME2N.F:: 3-Fluor-4-cyano-phenyl-4-ethylbenzoat
- ME3N.F:: 3-Fluor-4-cyano-phenyl-4-propylbenzoat
- ME5N.F:: 3-Fluor-4-cyano-phenyl-4-pentylbenzoat
- PCH-2:: p-trans-4-Ethylcyclohexylbenzonitril
- PCH-7:: p-trans-4-Heptylcylcohexylbenzonitril
- PCH-32:: trans-1-p-Ethylphenyl-4-propylcyclohexan
- CFET-3F:: 1-(4-(trans-4-propylcyclohexyl)-2-fluor-4'-yl-biphenyl)-2-(4-fluorphenyl)-ethan
- CFET-5F:: 1-(4-(trans-4-pentylcyclohexyl)-2-fluor-4'-yl-biphenyl)-2-(4-fluorphenyl)-ethan
- FET-3F:: 1-(2-fluor-4-propyl-4'-yl-biphenyl)-2-(4-fluorphenyl)-ethan
- FET-5F:: 1-(2-fluor-4-pentyl-4'-yl-biphenyl)-2-(4-fluorphenyl)-ethan
- CPTP-30CF₃:: 4- (trans-4-propylcyclohexyl)-4'-trifluormethoxyethan
- CPTP-50CF₃:: 4-(trans-4-pentylcyclohexyl)-4'-trifluormethoxyethan
- PTP-20F:: 4-Ethoxy-4'-fluortolan
- PYP3F:: 2-(4-Fluorphenyl)-5-propylpyrimidin
- PTP35:: 4-Propyl-4'-pentyltolan
- PTP45:: 4-Butyl-4'-pentyltolan
- BCH-52F:: 4-(trans-4-Pentylcyclohexyl)-2-fluor-4'-ethylbiphenyl
- CP-302FF:: trans-4-(trans-4-Propylcyclohexyl)-cyclohexancarbonsäure-(2,3-difluor-4-ethoxyphenylester)
- PCH-301:: trans-1-p-Methoxyphenyl-4-propylcyclohexan
- PCH-401:: trans-1-p-Methoxyphenyl-4-butylcyclohexan
- D-302:: 4-Ethoxyphenyl-trans-4-propylcyclohexylcarboxylat
- D-402:: 4-Ethoxyphenyl-trans-4-butylcyclohexylcarboxylat
- BCH-3F.F:: 4-(trans-4-Propylcyclohexyl)-3',4'-difluorbiphenyl
- BCH-5F.F: 4-(trans-4-Pentylcyclohexyl)-3',4'-difluorbiphenyl
- EHP-3F.F:: 4-[2-(trans-4-Propylcyclohexyl)-ethyl]-benzoesäure-(3,4-difluorphenylester)
- EHP-5F.F: 4-[2-(trans-4-Pentylcyclohexyl)-ethyl]-benzoesäure-(3,4-difluorphenylester)

## Patentansprüche

1. Supertwist-Flüssigkristallanzeige mit
- zwei planparallelen Trägerplatten, die mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach zwischen 100 und 600°, dadurch gekennzeichnet, daß die nematische Flüssigkristallmischung
a) auf Komponente A basiert, welche
- eine oder mehrere Verbindungen der Formeln IIa oder IIb: 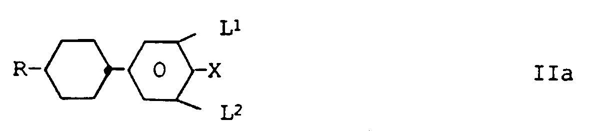 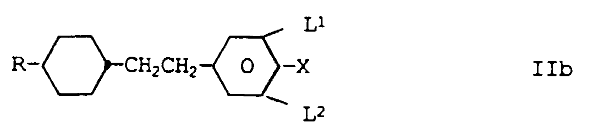
- eine oder mehrere Verbindungen der Formeln IIc bis IIe: 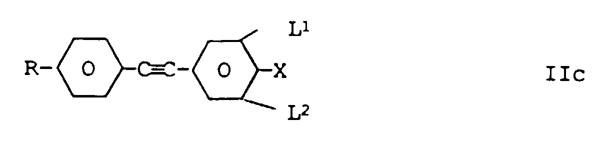 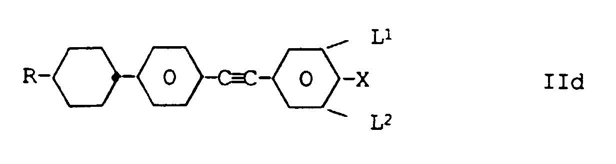 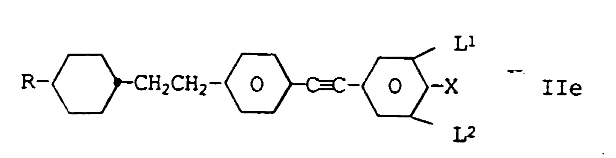
- und eine oder mehrere Verbindungen der Formeln IIf bis IIk enthält: 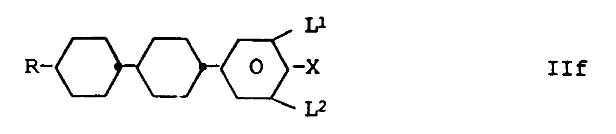 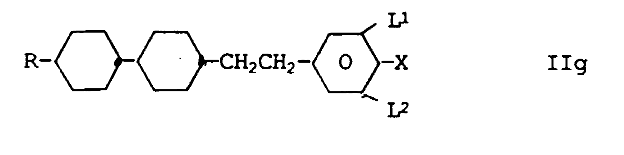 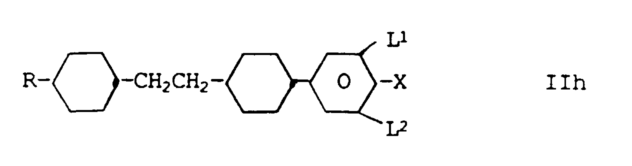 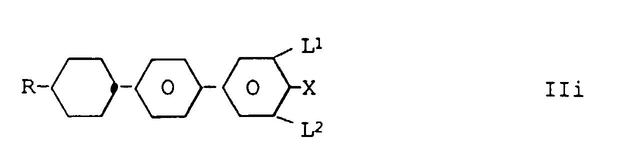 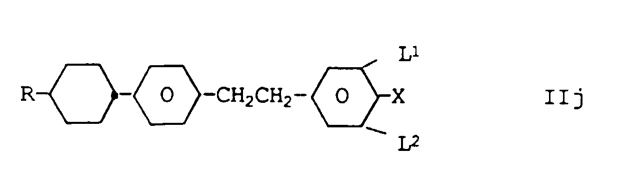 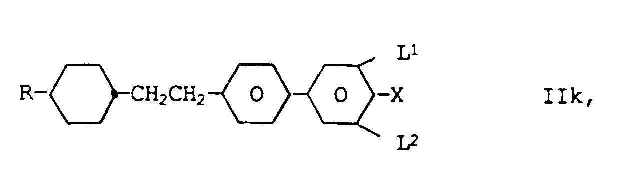 worin
R n-Alkyl,n-Alkoxy oder n-Alkenyl mit bis zu 9 C-Atomen, und
L¹ und L² jeweils H oder F,
X F, Cl, -CF₃, -CHF₂, -OCF₃, -OCHF₂, -OCF₂CF₂H oder -OC₂F₅ bedeuten,
b) 0-40 Gew.% einer flüssigkristallinen Komponente B, bestehend aus einer oder mehreren Verbindungen mit einer dielektrischen Anisotropie von -1,5 bis +1,5 der allgemeinen Formel I, enthält 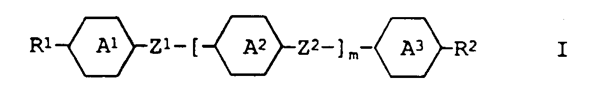 worin
R¹ und R² jeweils unabhängig voneinander n-Alkyl, n-Alkoxy, n-Oxaalkyl, ω-Fluoralkyl oder n-Alkenyl mit bis zu 9 C-Atomen, die Ringe A¹, A² und A³ jeweils unabhängig voneinander 1,4-Phenylen, 2- oder 3-Fluor-1,4-phenylen, trans-1,4-Cyclohexylen oder 1,4-Cyclohexenylen,
Z¹ und Z² jeweils unabhängig voneinander -CH₂CH₂-, -C≡C- oder eine Einfachbindung, und
m 0, 1 oder 2 bedeutet,
c) 0-20 Gew.% einer flüssigkristallinen Komponente C, bestehend aus einer oder mehreren Verbindungen mit einer dielektrischen Anisotropie von unter -1,5, enthält und
d) eine optisch aktive Komponente D in einer Menge enthält, daß das Verhältnis zwischen Schichtdicke (Abstand der planparallelen Trägerplatten) und natürlicher Ganghöhe der chiralen nematischen Flüssigkristallmischung etwa 0,2 bis 1,7 und insbesondere etwa 0,2 - 1,3 beträgt und die nematische Flüssigkristallmischung einen nematischen Phasenbereich von mindestens 60 °C, eine Viskosität von nicht mehr als 35 mPa.s und eine dielektrische Anisotropie von mindestens +1 aufweist, wobei die dielektrischen Anisotropien der Verbindungen und die auf die nematische Flüssigkristallmischung bezogenen Parameter auf eine Temperatur von 20 °C bezogen sind.

2. Anzeige nach Anspruch 1, dadurch gekennzeichnet, daß Komponente A Verbindungen der Formeln IIa, IIb, IIc, IIg und IIi, worin X F bedeutet, und Verbindungen der Formeln IId, IIe, IIf, IIg und IIi, worin X -CF₃ oder -CHF₂ bedeutet, enthält und der Anteil der Cyanverbindungen in Komponente A 0 bis 50 Gew.% beträgt.

3. Anzeige nach Anspruch 2, dadurch gekennzeichnet, daß Komponente A Verbindungen der Formeln C1 bis C4 enthält

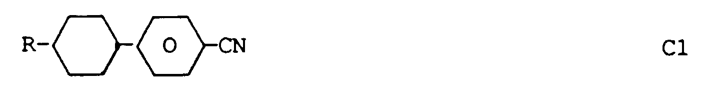

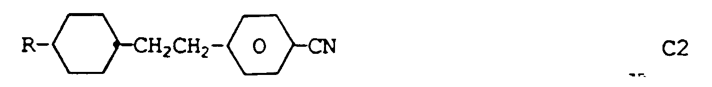

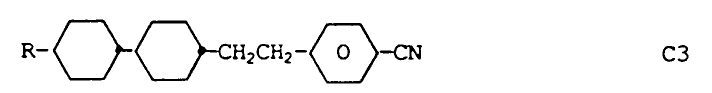

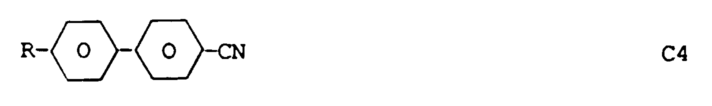

4. Anzeige nach mindestens einem der Ansprüche 1 bis 3, dadurch gekennzeichnet, daß X F, Cl, CF₃, -OCF₃, OCHF₂ oder -CHF₂ bedeutet.

5. Anzeige nach mindestens einem der Ansprüche 1 bis 4, dadurch gekennzeichnet, daß Komponente B eine oder mehrere Verbindungen ausgewählt aus der Gruppe bestehend aus I1 bis I8 enthält: 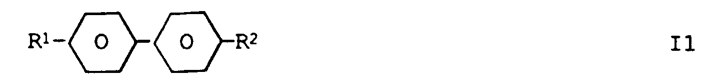 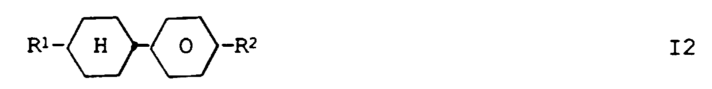 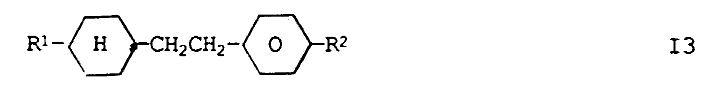 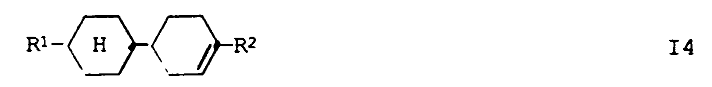 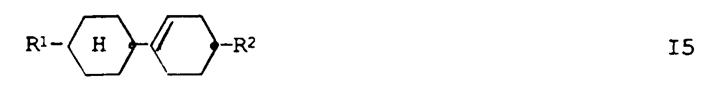 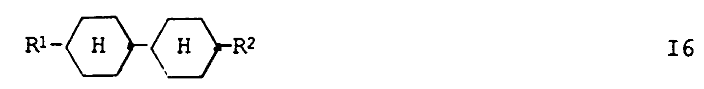 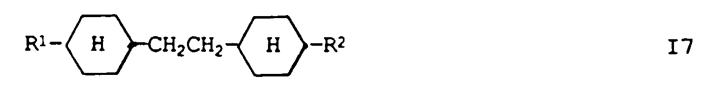 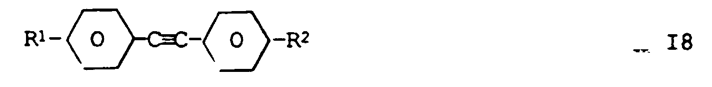 worin R¹ und R² die in Anspruch 1 angegebene Bedeutung haben.

6. Anzeige nach Anspruch 5, dadurch gekennzeichnet, daß Komponente B zusätzlich eine oder mehrere Verbindungen ausgewählt aus der Gruppe bestehend aus I9 bis I24 enthält: 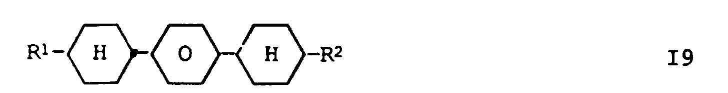 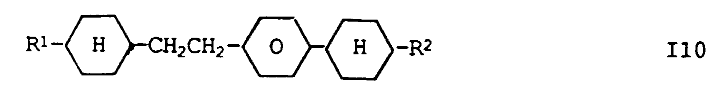 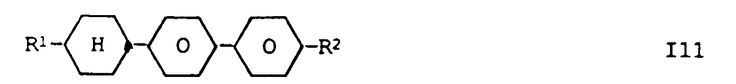 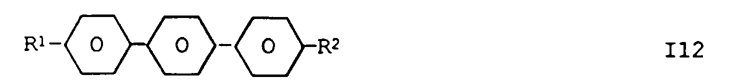 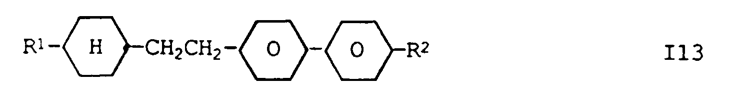 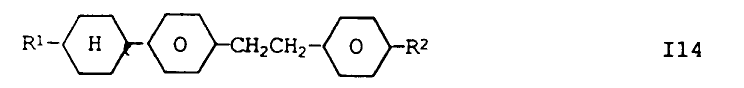 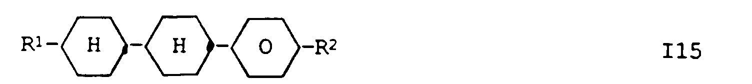 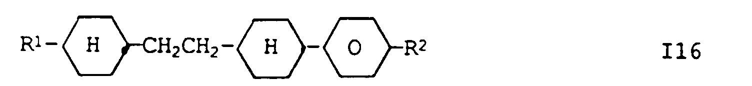 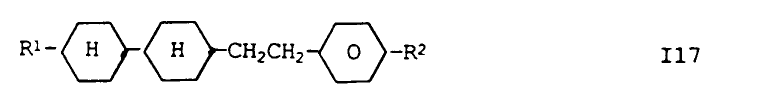 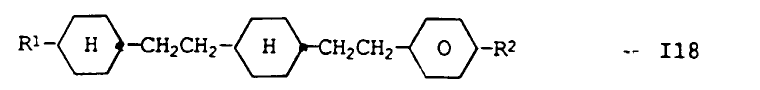 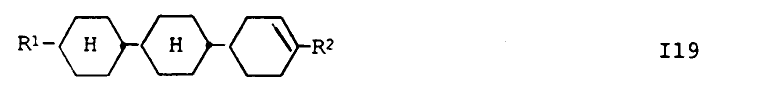 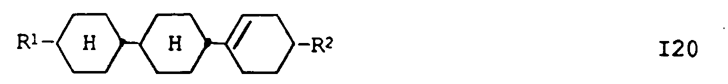 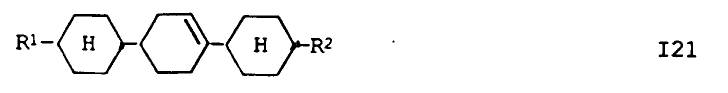 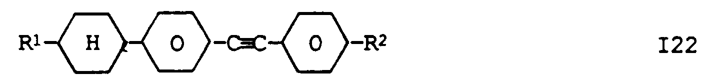 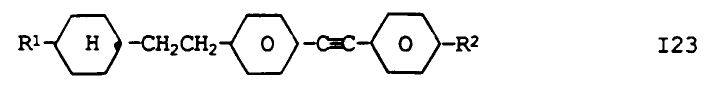 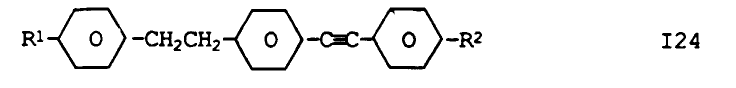 worin R¹ und R² die in Anspruch 1 angegebene Bedeutung haben und die 1,4-Phenylengruppen in I9 bis I18 jeweils unabhängig voneinander auch durch Fluor ein- oder mehrfach substituiert sein können.

7. Anzeige nach Anspruch 5 oder 6, dadurch gekennzeichnet, daß Komponente B zusätzlich eine oder mehrere Verbindungen ausgewählt aus der Gruppe bestehend aus I25 bis I29 enthält: 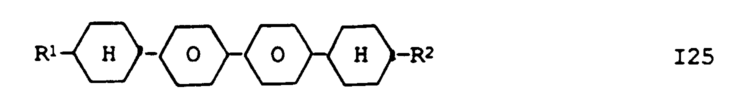 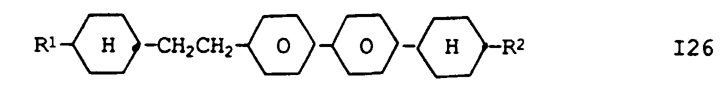 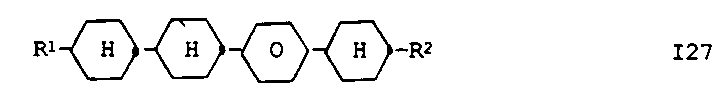 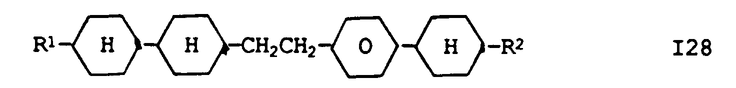 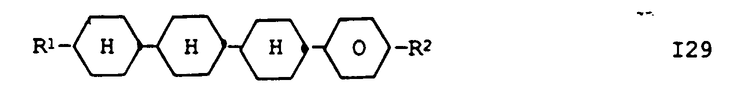 worin R¹ und R² die in Anspruch 1 angegebene Bedeutung haben und die 1,4-Phenylengruppen in I25 bis I29 jeweils unabhängig voneinander auch durch Fluor ein- oder mehrfach substituiert sein können.

8. Anzeige nach mindestens einem der Ansprüche 1 bis 7, dadurch gekennzeichnet, daß Komponente B eine oder mehrere Verbindungen ausgewählt aus der Gruppe bestehend aus I30 und I31 enthält: 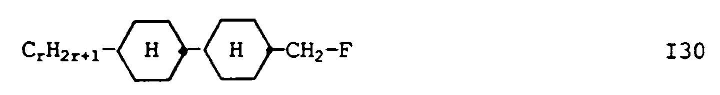 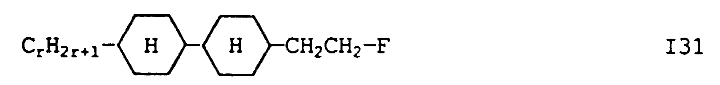 worin CᵣH₂ᵣ₊₁ eine geradkettige Alkylgruppe mit bis zu 7 C-Atomen ist.

9. Anzeige nach mindestens einem der Ansprüche 1 bis 8, dadurch gekennzeichnet, daß die Flüssigkristallmischung neben den Komponenten A, B und C zusätzlich eine oder mehrere Verbindungen ausgewählt aus der Gruppe bestehend aus III und IV enthält: 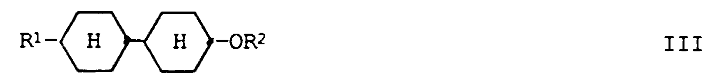 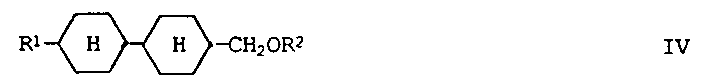 worin R¹ und R² die in Anspruch 1 angegebene Bedeutung haben.

10. Anzeige nach mindestens einem der Ansprüche 1-9, dadurch gekennzeichnet, daß die Flüssigkristallmischung neben den Komponenten A, B und C zusätzlich eine oder mehrere Verbindungen ausgewählt aus der Gruppe bestehend aus V und VI enthält: 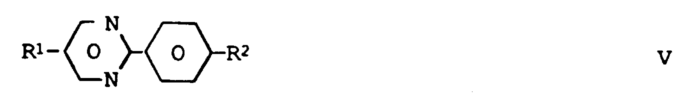 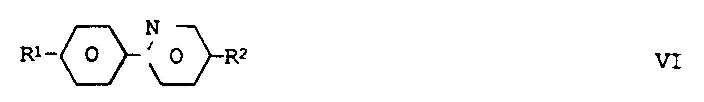 worin R¹ und R² die in Anspruch 1 angegebene Bedeutung haben.

11. Anzeige nach mindestens einem der Ansprüche 1-10, dadurch gekennzeichnet, daß die Komponente C eine oder mehrere Verbindungen ausgewählt aus der Gruppe bestehend aus VII bis XI enthält: 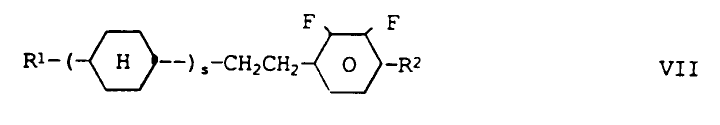 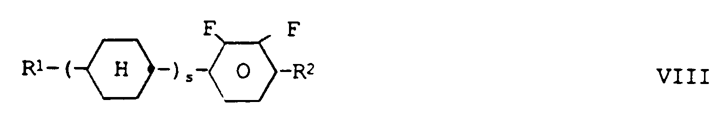 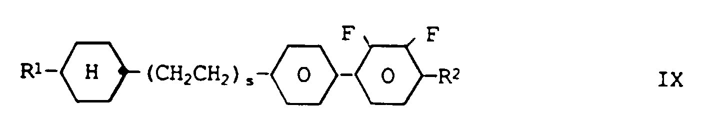 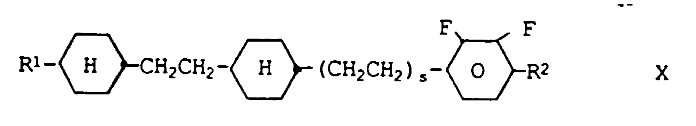 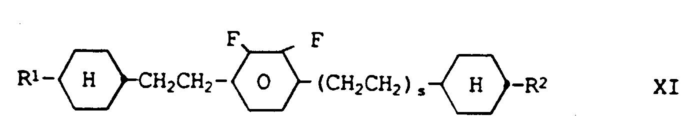 worin R¹ und R² die in Anspruch 1 angegebene Bedeutung haben und S 0 oder 1 ist.

12. Anzeige nach mindestens einem der Ansprüche 1-11, dadurch gekennzeichnet, daß die Komponente B eine oder mehrere Verbindungen ausgewählt aus der Gruppe bestehend aus XII bis XIV enthält: 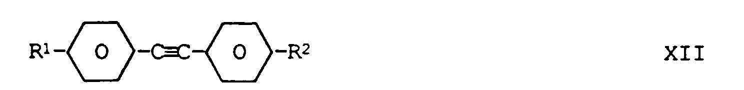 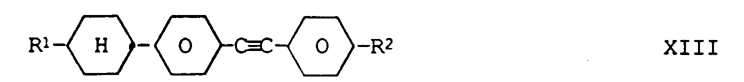 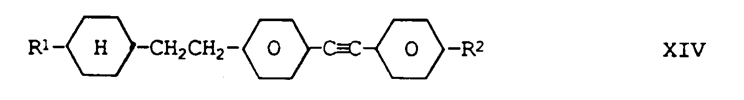 worin R¹ und R² die in Anspruch 1 angegebene Bedeutung haben.

13. Flüssigkristallmischung der in einem der Ansprüche 1 bis 12 definierten Zusammensetzung.

## Claims

1. Supertwist liquid-crystal display containing
- two plane-parallel outer plates which, together with a frame, form a cell,
- a nematic liquid-crystal mixture of positive dielectric anisotropy which is present in the cell,
- electrode layers with superposed alignment layers on the insides of the outer plates,
- a pitch angle between the longitudinal axis of the molecules at the surface of the outer plates and the outer plates of from about 1 degree to 30 degrees, and
- a twist angle of the liquid-crystal mixture in the cell from alignment layer to alignment layer with a value of between 100 and 600°, characterized in that the nematic liquid-crystal mixture
a) is based on component A, which contains
- one or more compounds of the formula IIa and IIb: 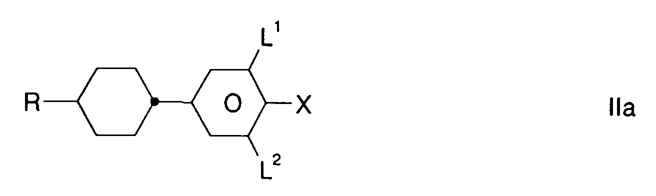 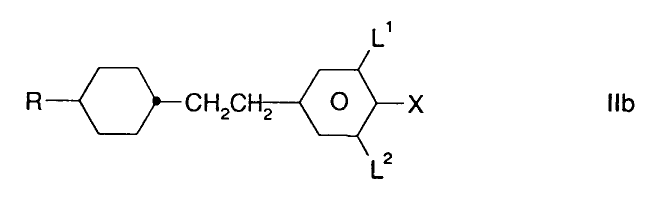
- one or more compounds of the formula IIc to IIe: 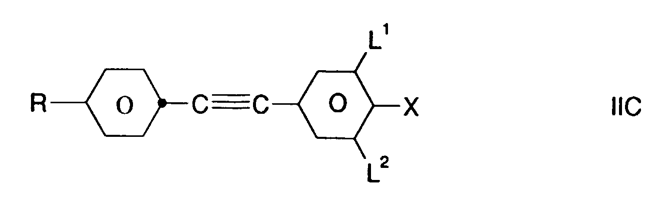 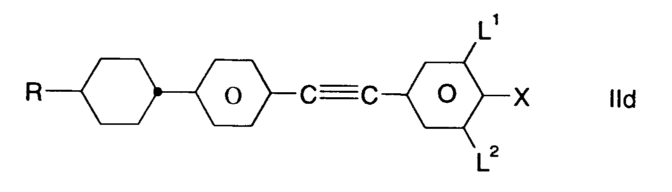 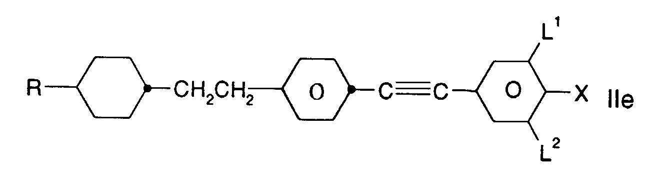
- and one or more compounds of the formulae IIf to IIk: 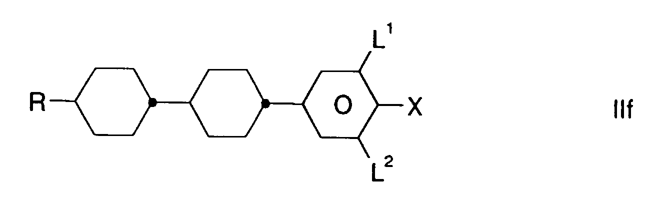 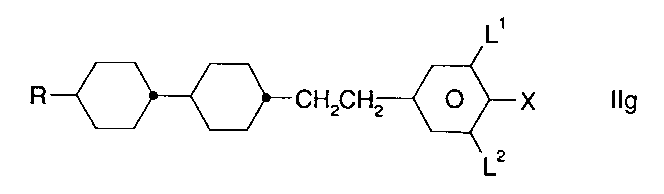 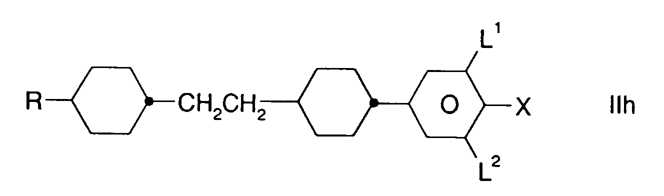 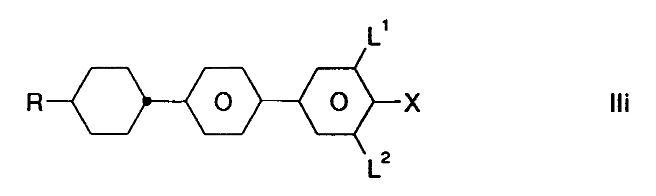 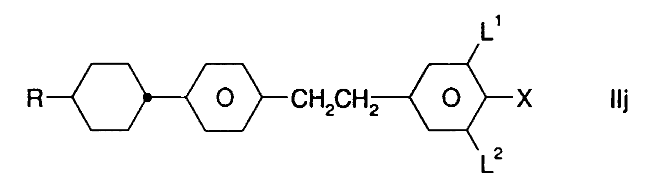 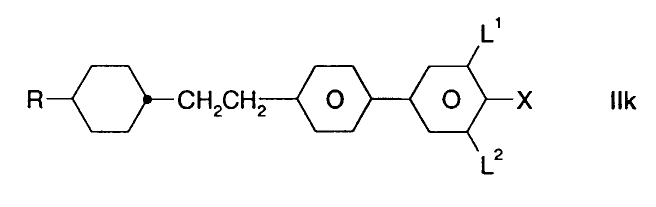 in which
R is n-alkyl, n-alkoxy or n-alkenyl having up to 9 carbon atoms,
L¹ and L² are each H or F, and
X is F, Cl, -CF₃, -CHF₂, -OCF₃, -OCHF₂, -OCF₂CF₂H or -OC₂F₅,
b) contains 0-40 % by weight of a liquid-crystalline component B, consisting of one or more compounds having a dielectric anisotropy of from -1.5 to +1.5, of the general formula I 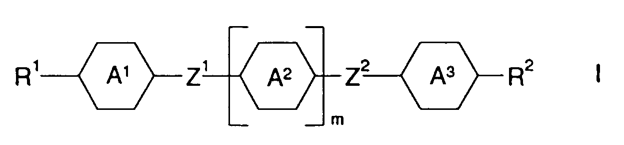 in which
R¹ and R² are each, independently of one another, n-alkyl, n-alkoxy, n-oxaalkyl, ω-fluoroalkyl or n-alkenyl having up to 9 carbon atoms, the rings A¹, A² and A³ are each, independently of one another, 1,4-phenylene, 2- or 3-fluoro-1,4-phenylene, trans-1,4-cyclohexylene or 1,4-cyclohexylene,
Z¹ and Z² are each, independently of one another, -CH₂CH₂, -C≡C- or a single bond, and
m is 0, 1 or 2,
c) contains 0-20 % by weight of a liquid-crystalline component C consisting of one or more compounds having a dielectric anisotropy of below -1.5, and
d) contains an optically active component D in such an amount that the ratio between the layer thickness (separation of the plane-parallel outer plates) and the natural pitch of the chiral nematic liquid-crystal mixture is from about 0.2 o 1.7 and in particular from about 0.2 to 1.3, and the nematic liquid-crystal mixture has a nematic phase range of at least 60 °C, a viscosity of not more than 35 mPa · and a dielectric anisotropy of at least +1, the dielectric anisotropies of the compounds and the parameters based on the nematic liquid-crystal mixture being based on a temperature of 20°C.

2. Display according to Claim 1, characterized in that component A contains compounds of the formulae IIa, IIb, IIc, IIg and IIi in which X is F and compounds of the formulae IId, IIe, IIf, IIg and IIi in which X is -CF₃ or -CHF₂, and the proportion of the cyano compounds in component A is from 0 to 50 % by weight.

3. Display according to Claim 2, characterized in that component A contains compounds of the formulae C1 to C4

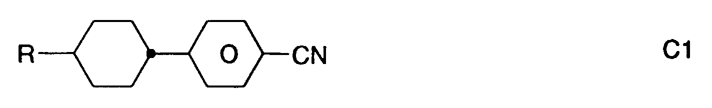

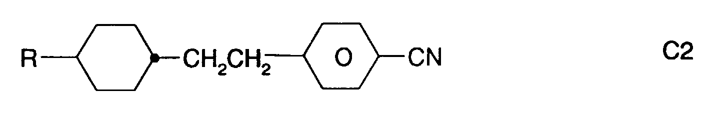

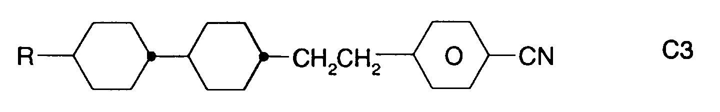

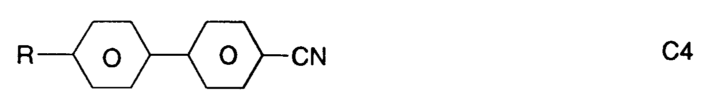

4. Display according to at least one of Claim 1 to 3, characterized in that X is F, Cl, CF₃, -OCF₃, -OCHF₂ or -CHF₂.

5. Display according to at least one of Claims 1 to 4, characterized in that component B contains one or more compounds selected from the group consisting of I1 to I8: 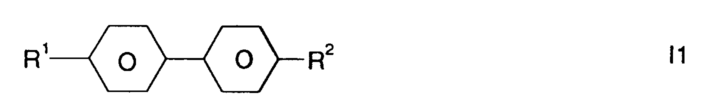 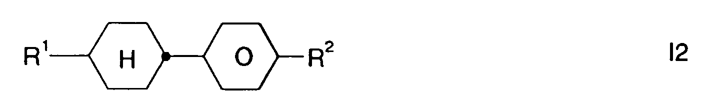 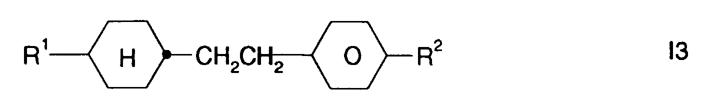 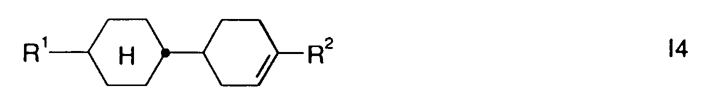 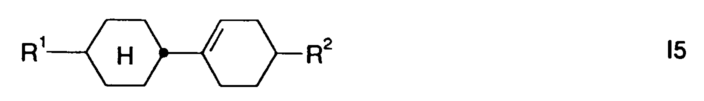 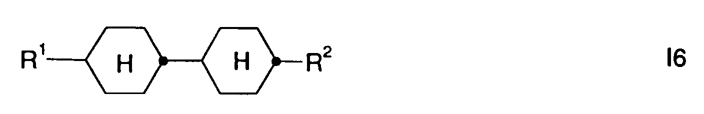 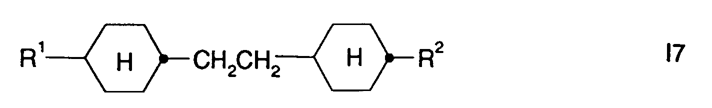 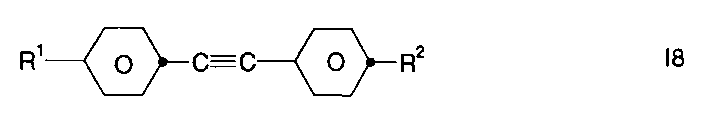 in which R¹ and R² are as defined in Claim 1.

6. Display according to Claim 5, characterized in that component B additionally contains one or more compounds selected from the group consisting of I9 to I24: 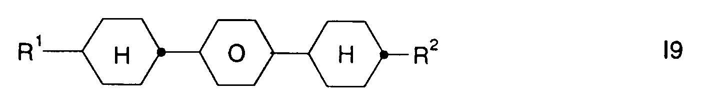 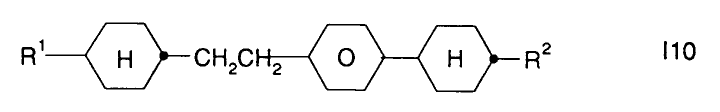 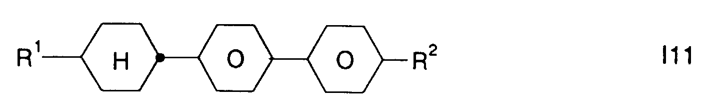 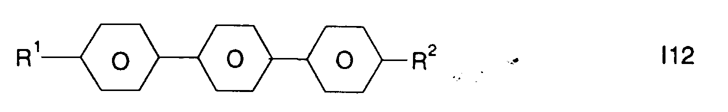 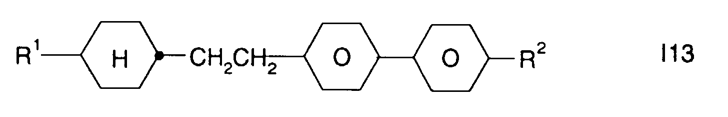 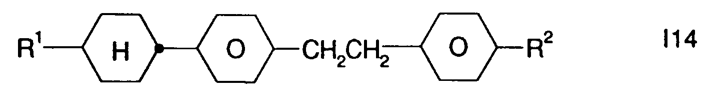 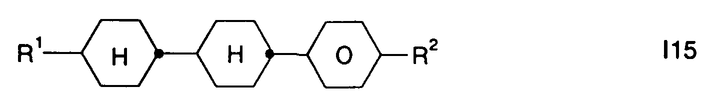 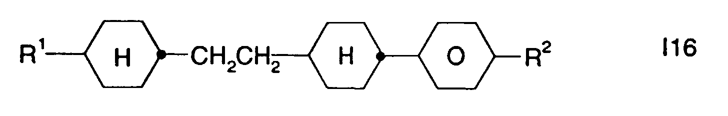 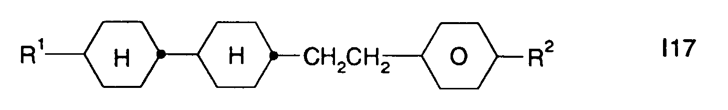 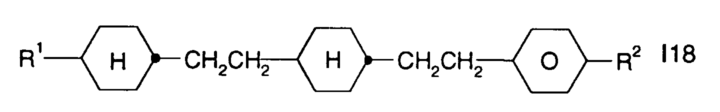 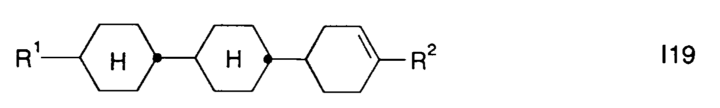 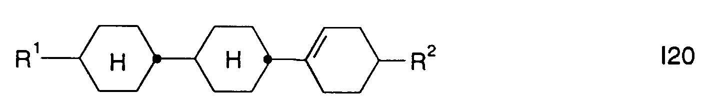 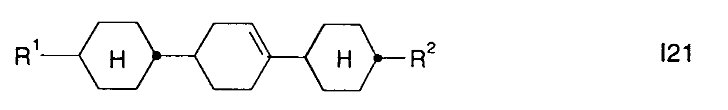 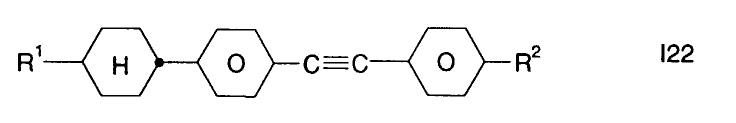 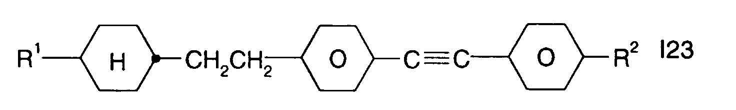 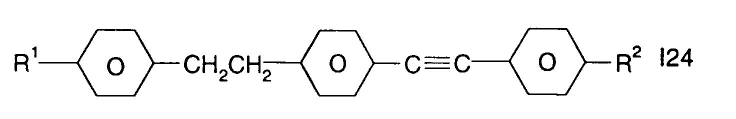 in which R¹ and R² are as defined in Claim 1, and the 1,4-phenylene groups in I9 to I18 may each, independently of one another also be mono- or polysubstituted by fluorine.

7. Display according to Claim 5 or 5, characterized in that component B additionally contains one or more compounds selected from the group consisting of I25 to I29: 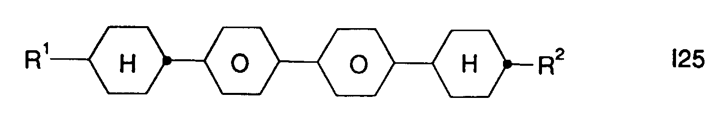 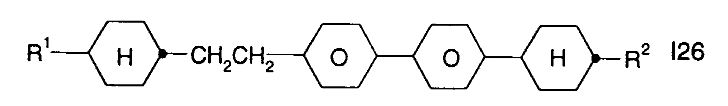 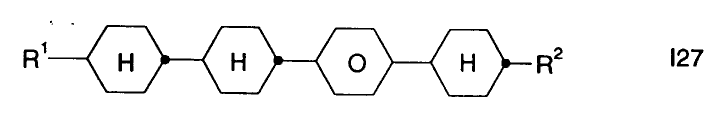 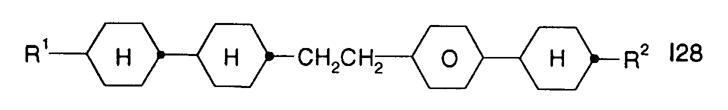 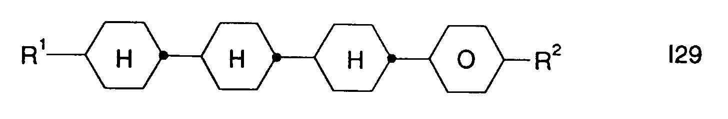 in which R¹ and R² are as defined in Claim 1, and the 1,4-phenylene groups in I25 to I29 may each, independently of one another, also be mono- or polysubstituted by fluorine.

8. Display according to at least one of Claims 1 to 7, characterized in that component B contains one or more compounds selected from the group consisting of I30 and I31: 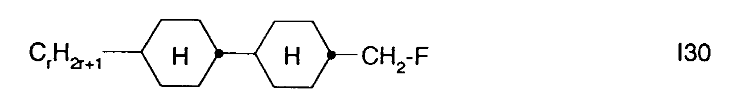 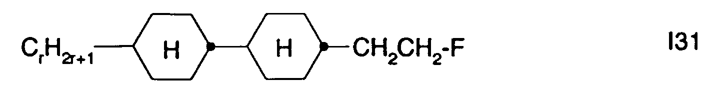 in which CᵣH₂ᵣ₊₁ is a straigth-chain alkyl group having up to 7 carbon atoms.

9. Display according to at least one of Claims 1 to 8, characterized in that the liquid-crystal mixture contains, in addition to components A, B and C, additionally one or more compounds selected fromt he group consisting of III and IV: 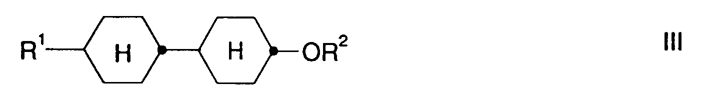 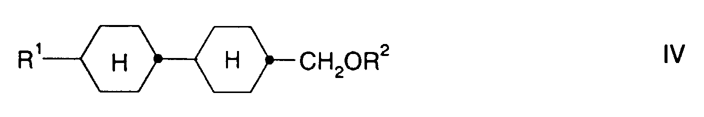 in which R¹ and R² are as defined in Claim 1.

10. Display according to at least one of Claim 1-9, characterized in that the liquid-crystal mixture contains, in addition to components A, B and C, additionally one or more compounds selected from the group consisting of V and VI: 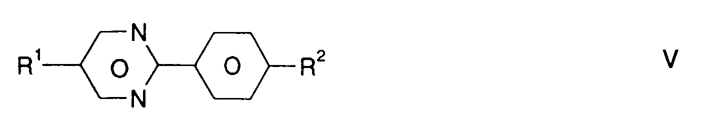 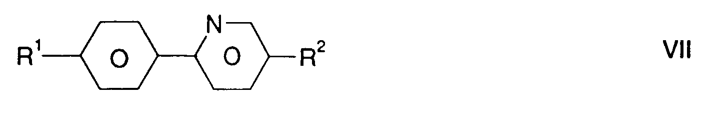 in which R¹ and R² are as defined in Claim 1.

11. Display according to at least one of Claims 1-10, characterized in that component C contains one or more compounds selected from the group consisting of VII to XI: 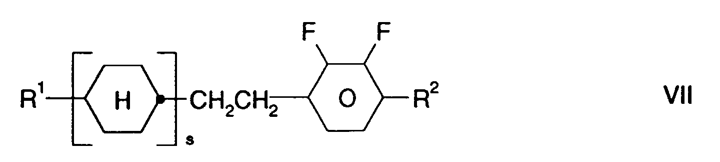 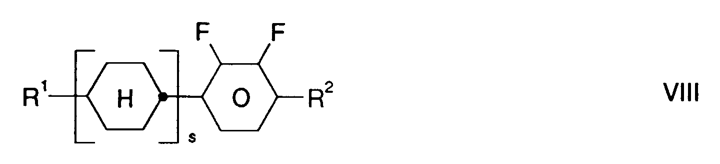 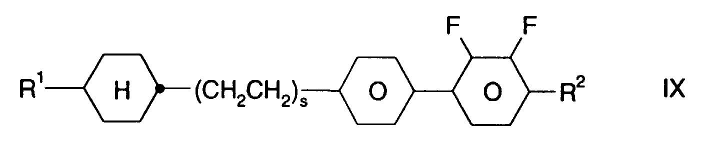 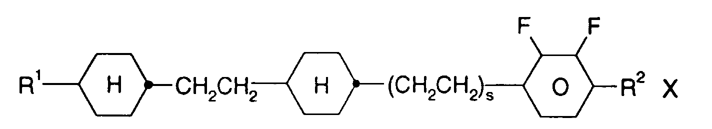 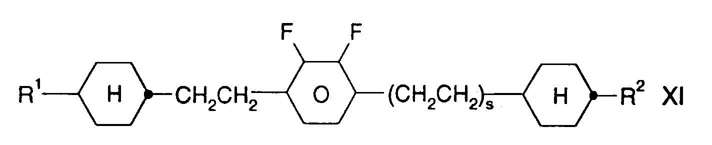 in which R¹ and R² are as defined in Claim 1, and s is 0 or 1.

12. Display according to at least one of Claims 1-11, characterized in that component B contains one or more compunds selected from the group consisting of XII to XIV: 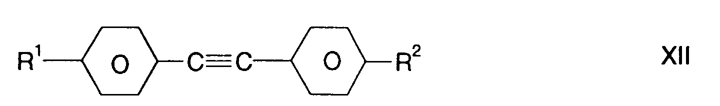 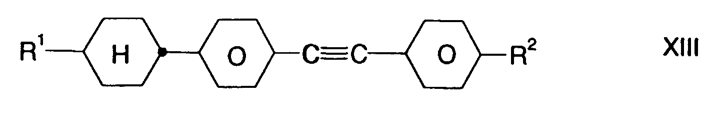 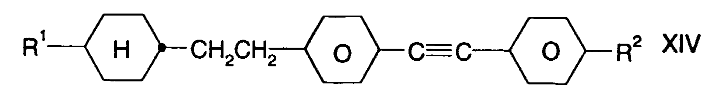 in which R¹ and R² are as defined in Claim 1.

13. Liquid-crystal mixture of the composition defined in one of Claims 1 to 12.

## Revendications

1. Affichage à cristaux liquides super-torsadés avec
- deux plaques support à plans parallèles qui avec un bord forment une cellule,
- un mélange de cristaux liquides nématiques à anisotropie diélectrique positive se trouvant dans la cellule,
- des couches d'électrodes sur lesquelles se trouvent des couches d'orientation sur les côtés intérieurs des plaques support,
- un angle d'incidence entre l'axe longitudinal des molécules à la surface des plaques support et les plaques support d'environ 1 degré à 30 degrés, et
- un angle de torsade du mélange de cristaux liquides dans la cellule d'une couche d'orientation à l'autre s'élevant entre 100 et 600°,
caractérisé en ce que le mélange de cristaux liquides nématique
a) est à base de composant A, qui contient
- un ou plusieurs composés de formules IIa ou IIb: 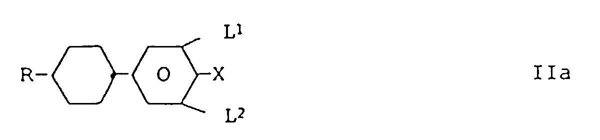 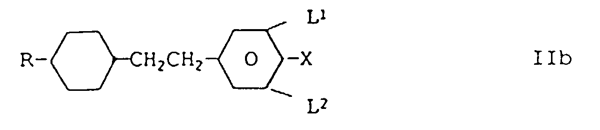
- un ou plusieurs composés de formules IIc à IIe: 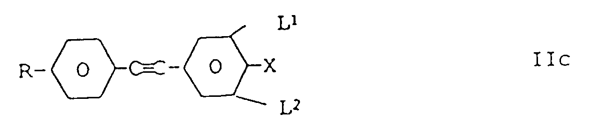 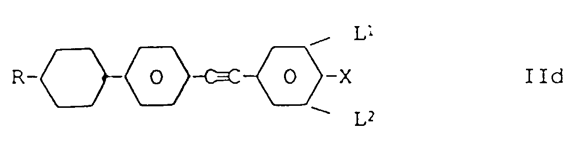 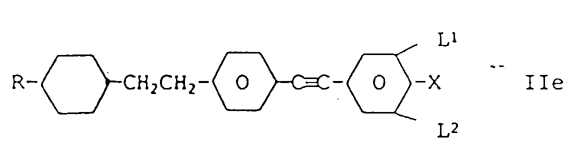
- et un ou plusieurs composés de formules IIf à IIk: 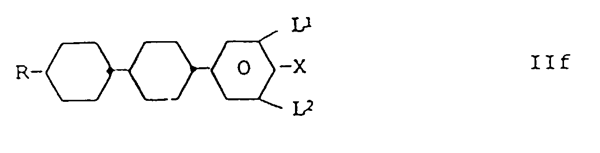 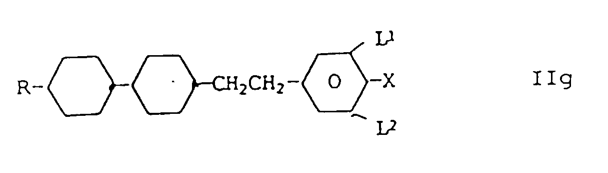 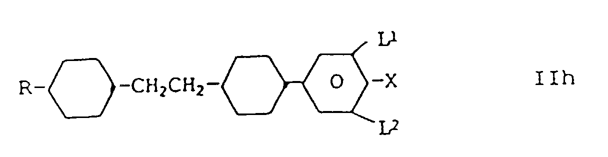 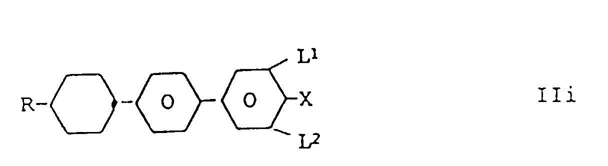 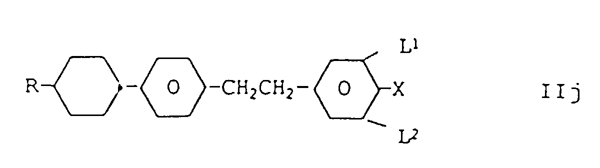 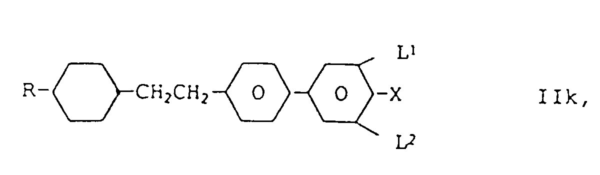
dans lesquelles
R représente un n-alkyle, un n-alcoxy ou un n-alcényle comportant jusqu'à 9 atomes de carbone, et
L¹ et L² représentent à chaque fois H ou F,
X représente F, Cl, -CF₃, -CHF₂, -OCF₃, -OCHF₂, -OCF₂CF₂H ou -OC₂F₅,
b) contient de 0 à 40% en poids d'un composant B, constitué d'un ou plusieurs composés à anisotropie diélectrique allant de -1,5 à +1,5 de formule générale I, 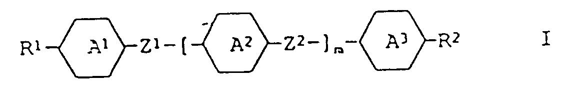 dans laquelle R¹ et R² représentent à chaque fois indépendamment l'un de l'autre un n-alkyle, un n-alcoxy, un n-oxaalkyle, un ω-fluoroalkyle ou un n-alcényle ayant jusqu'à 9 atomes de carbone, les noyaux A¹, A² et A³ représentent chacun indépendamment l'un de l'autre un 1,4-phénylène, un 2- ou 3-fluoro-1,4-phénylène, un trans-1,4-cyclohexylène ou un 1,4-cyclohexénylène,
Z¹ et Z² représentent chacun indépendamment l'un de l'autre -CH₂CH₂- , -C≡C- ou une liaison simple, et
m vaut 0, 1 ou 2,
c) contient de 0 à 20% en poids d'un composant C à cristaux liquides, constitué d'un ou plusieurs composés à anisotropie diélectrique inférieure à -1,5 , et
d) contient un composant D optiquement actif en une quantité telle que le rapport entre l'épaisseur de la couche (intervalle entre les plaques support à plans parallèles) et le pas naturel du mélange de cristaux liquides nématique chiral s'élève à environ 0,2 à 1,7 et en particulier à environ 0,2 - 1,3 ,
et en ce que le mélange de cristaux liquides nématique présente un domaine de phase nématique d'au moins 60°C, une viscosité d'au plus 35 mPa.s et une anisotropie diélectrique d'au moins +1, les anisotropies diélectriques des composés et les paramètres se rapportant au mélange de cristaux liquides nématique ayant trait à une température de 20°C.

2. Affichage selon la revendication 1, caractérisé en ce que le composant A contient des composés de formules IIa, IIb, IIc, IIg et IIi, dans lesquelles X représente F, et des composés de formules IId, IIe, IIf, IIg et IIi, dans lesquelles X représente -CF₃ ou -CHF₂, et la proportion des composés cyano dans le composant A s'élève à 0 à 50% en poids.

3. Affichage selon la revendication 2, caractérisé en ce que le composant A contient des composés de formules C1 à C4

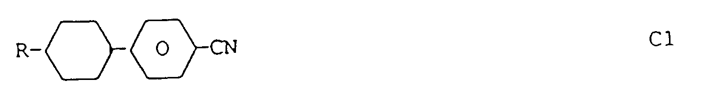

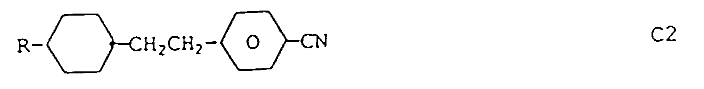

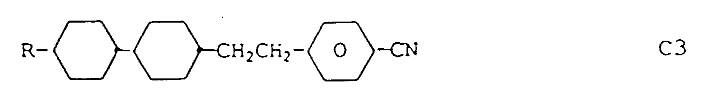

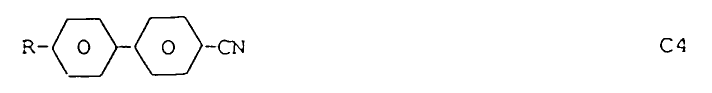

4. Affichage selon au moins une des revendications 1 à 3, caractérisé en ce que X représente F, Cl, CF₃, -OCF₃, OCHF₂ ou -CHF₂.

5. Affichage selon au moins une des revendications 1 à 4, caractérisé en ce que le composant B contient un ou plusieurs composés choisis dans le groupe constitué par I1 à I8: 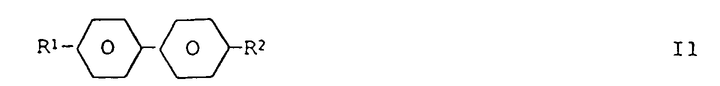 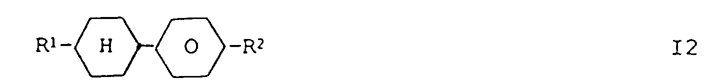 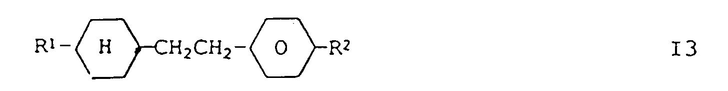 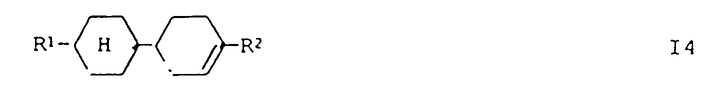 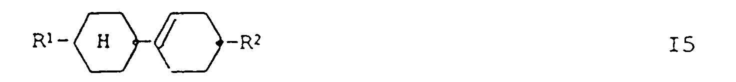 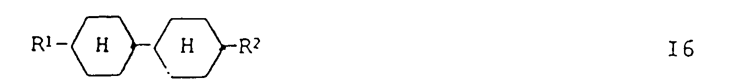 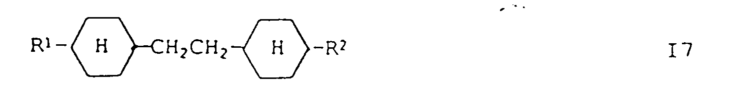 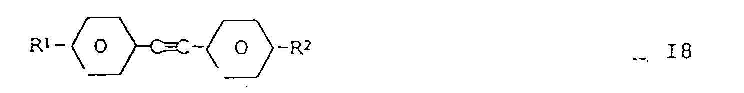 où R¹ et R² ont la signification donnée dans la revendication 1.

6. Affichage selon la revendication 5, caractérisé en ce que le composant B contient en outre un ou plusieurs composés choisis dans le groupe constitué par I9 à I24: 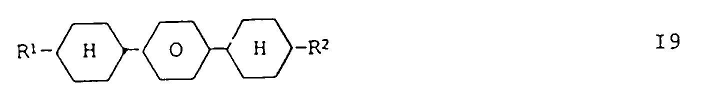 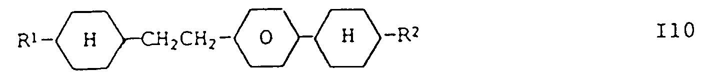 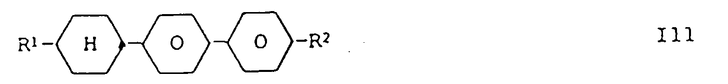 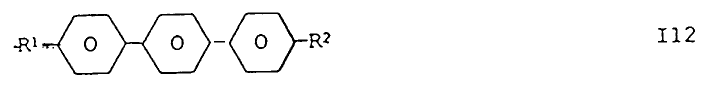 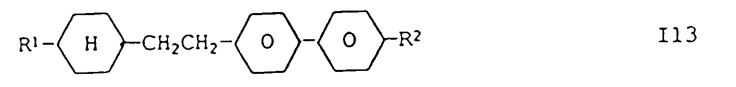 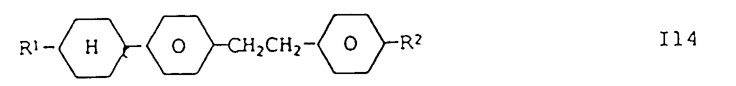 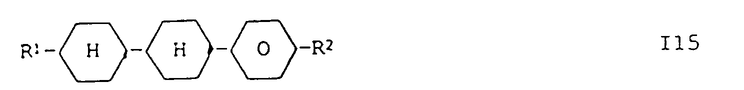 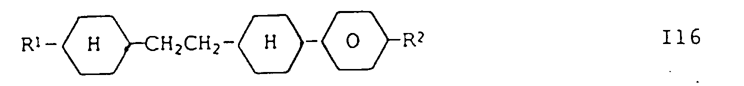 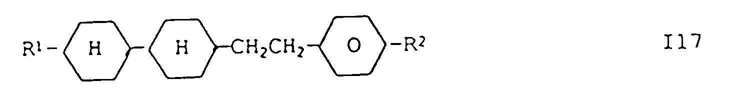 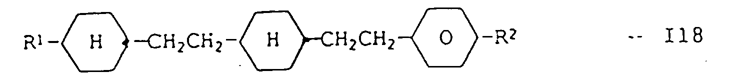 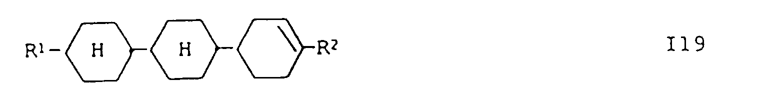 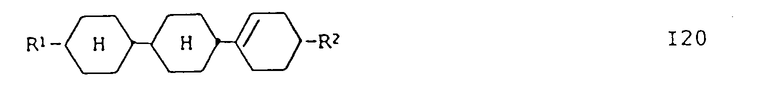 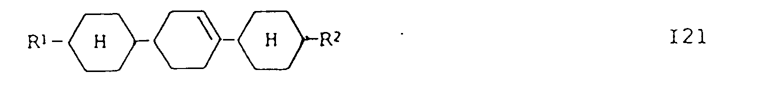 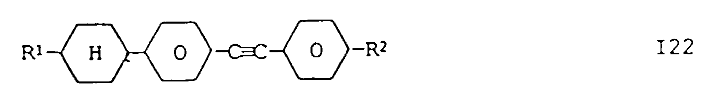 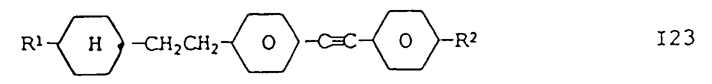 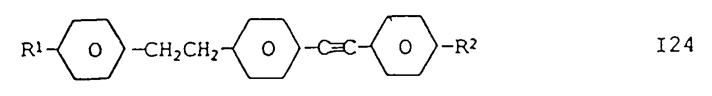 où R¹ et R² ont la signification donnée dans la revendication 1 et les groupes 1,4-phénylène dans I9 à I18 peuvent à chaque fois être également mono- ou polysubstitués indépendamment l'un de l'autre par un fluor.

7. Affichage selon la revendication 5 ou 6, caractérisé en ce que le composant B contient en outre un ou plusieurs composés choisis dans le groupe constitué par I25 à I29: 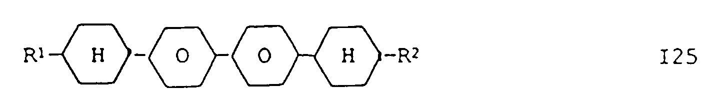 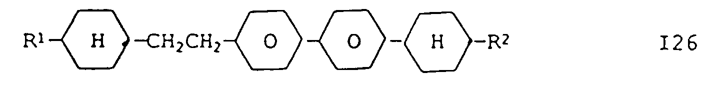 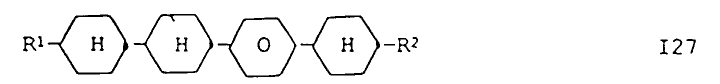 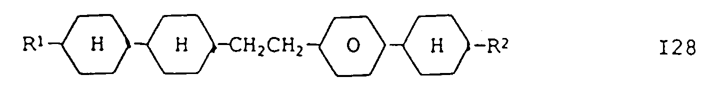 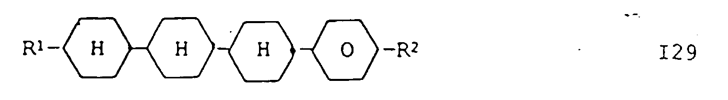 où R¹ et R² ont la signification donnée dans la revendication 1 et les groupes 1,4-phénylène dans I25 à I29 peuvent être également à chaque fois mono- ou polysubstitués indépendamment l'un de l'autre par un fluor.

8. Affichage selon au moins une des revendications 1 à 7, caractérisé en ce que le composant B contient un ou plusieurs composés choisis dans le groupe constitué par I30 et I31: 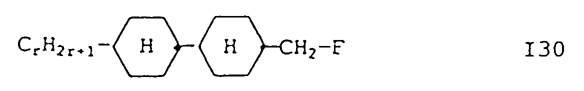 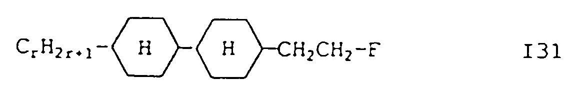 où CᵣH₂ᵣ₊₁ est un groupe alkyle à chaîne droite ayant jusqu'à 7 atomes de carbone.

9. Affichage selon au moins une des revendications 1 à 8, caractérisé en ce que le mélange de cristaux liquides contient en outre, à côté des composants A, B et C, un ou plusieurs composés choisis dans le groupe constitué par III et IV: 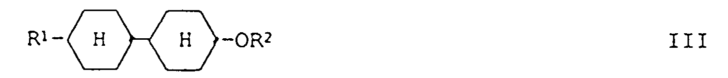 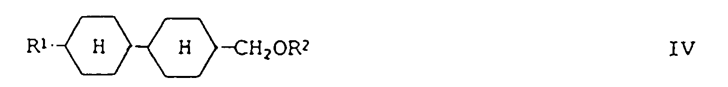 où R¹ et R² ont la signification donnée dans la revendication 1.

10. Affichage selon au moins une des revendications 1-9, caractérisé en ce que le mélange à cristaux liquides contient en outre, à côté des composants A, B et C, un ou plusieurs composés choisis dans le groupe constitué par V et VI: 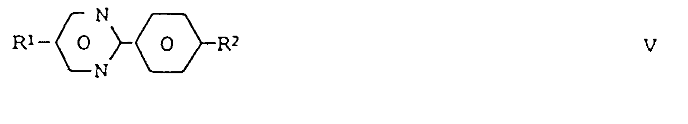 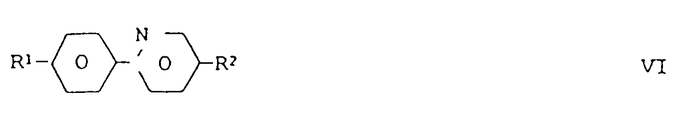 où R¹ et R² ont la signification donnée dans la revendication 1.

11. Affichage selon au moins une des revendications 1-10, caractérisé en ce que le composant C contient un ou plusieurs composés choisis dans le groupe constitué par VVII à XI: 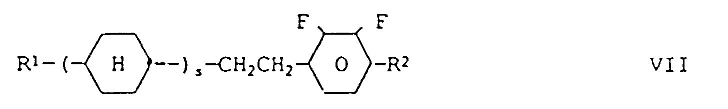 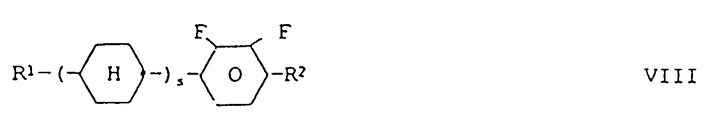 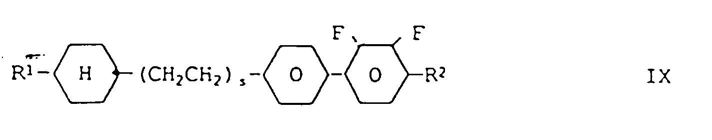 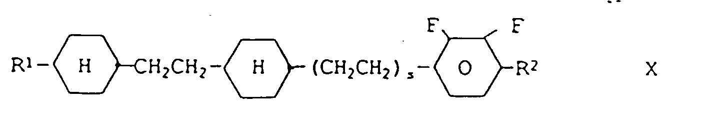 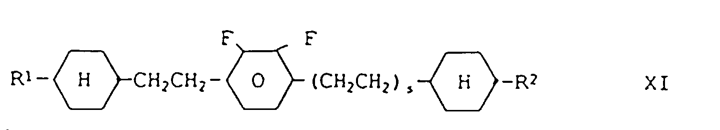 où R¹ et R² ont la signification donnée dans la revendication 1 et S vaut 0 ou 1.

12. Affichage selon au moins une des revendications 1-11, caractérisé en ce que le composant B contient un ou plusieurs composés choisis dans le groupe constitué par XII à XIV: 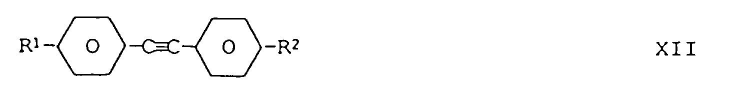 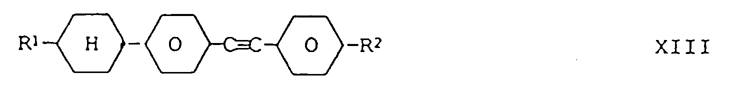 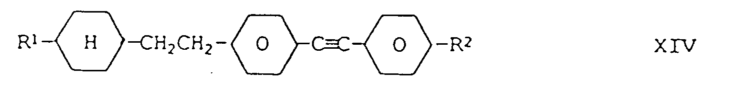 où R¹ et R² ont la signification donnée dans la revendication 1.

13. Mélange de cristaux liquides de composition définie dans une des revendications 1 à 12.
